(19) Europäisches Patentamt
European Patent Office
Office européen des brevets

(11) **EP 2 046 493 B1**

(12) **EUROPÄISCHE PATENTSCHRIFT**

(45) Veröffentlichungstag und Bekanntmachung des Hinweises auf die Patenterteilung:
**03.10.2012  Patentblatt 2012/40**

(21) Anmeldenummer: **07786307.4**

(22) Anmeldetag: **24.07.2007**

(51) Int Cl.:
**B01J 19/00** $^{(2006.01)}$       **G01N 1/00** $^{(2006.01)}$

(86) Internationale Anmeldenummer:
**PCT/EP2007/006581**

(87) Internationale Veröffentlichungsnummer:
**WO 2008/012073 (31.01.2008 Gazette 2008/05)**

(54) **VORRICHTUNG UND VERFAHREN ZUR HANDHABUNG VON MULTIKOMPONENTEN-GEMISCHEN**

DEVICE AND METHOD FOR HANDLING MULTI-COMPONENT MIXTURE

DISPOSITIF ET PROCÉDÉ DE MANIPULATION DE MÉLANGES À COMPOSANTS MULTIPLES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **24.07.2006  DE 102006034172**

(43) Veröffentlichungstag der Anmeldung:
**15.04.2009  Patentblatt 2009/16**

(73) Patentinhaber: **HTE Aktiengesellschaft The High Throughput
Experimentation Company
69123 Heidelberg (DE)**

(72) Erfinder:
• **HAAS, Alfred
69214 Eppelheim (DE)**

• **VIETZE, Uwe
69214 Eppelheim (DE)**
• **MOELLER, Andreas, Christian
A-4020 Linz (AT)**

(74) Vertreter: **Tostmann, Holger Carl et al
Wallinger Ricker Schlotter Tostmann
Patent- und Rechtsanwälte
Zweibrückenstrasse 5-7
80331 München (DE)**

(56) Entgegenhaltungen:
**WO-A-02/092220        WO-A-2004/052530
WO-A-2005/063372        US-A1- 2005 169 815
US-B1- 6 551 832**

**Beschreibung**

Die vorliegende Erfindung betrifft eine Vorrichtung und ein Verfahren zur Handhabung von Multikomponenten-Gemischen, enthaltend zumindest zwei nicht vollständig mischbare fluide Phasen. Die Vorrichtung gemäβ Anspruch 1 enthält eine Anordnung von zumindest zwei Reaktionsräumen, die mit jeweils einem Hochdruck-Abscheider verbunden sind, welche mit jeweils einem Niederdruck-Abscheider in Wirkverbindung steht. Jeder einzelne Hochdruck-Abscheider weist eine Ausgangsleitung für flüchtige gasförmige Komponenten auf. Jeder einzelne Niederdruck-Abscheider steht bevorzugt jeweils mit einem Gas-Sammelbehälter in Wirkverbindung, wobei es bevorzugt ist, dass zumindest zwei Niederdruck-Abscheider einen Gas-Sammelbehälter teilen.

Bei einer Vielzahl von chemischen Prozessen fallen Multikomponenten-Gemische an, die beispielsweise aus Prozess-Systemen in Analyse-Systeme zu transferieren sind. Multikomponenten-Gemische müssen dabei typischerweise Trennschritten oder einer Produkt-Aufarbeitung unterzogen werden. Multikomponenten-Gemische werden bevorzugt in Abscheidern getrennt, wobei beispielsweise die flüssige und die Gasphase voneinander getrennt werden.

Vorrichtungen und Verfahren zur Handhabung von Multikomponenten-Gemischen sind prinzipiell bekannt. Stand der Technik auf dem Gebiet der Handhabung von Multikomponenten-Gemischen stellen beispielsweise Vorrichtungen und Verfahren zur Testung von FCC-Katalysatoren (*Fluid Catalytic Cracking Catalysts*) im Laborbereich dar, die auf dem Standard ASTM-D 3907-80 beruhen.

Weiterentwicklungen der in der ASTM-D 3907-80 beschriebenen Vorrichtungen wurden von D. Wallenstein et al. veröffentlicht [siehe beispielsweise D. Wallenstein et al., Applied Catalysis A: General 167 (1998) 141-155 oder D. Wallenstein et al., Applied Catalysis A: General 231 (2002) 227 - 242]. Die dort beschriebenen Verfahren betreffen eine pulsartige Zuführung von Eduktfluid in den Reaktionsraum, wobei die aus dem Reaktionsraum austretenden Produktfluide direkt in ein Niederdruck-System transferiert werden. Innerhalb des Niederdruck-Systems werden die flüssigen und gasförmigen Bestandteile des Produktfluids getrennt und anschließend jeweils unabhängig voneinander einer integralen Analyse unterzogen.

Eine Übersicht über das technische Gebiet, auf welches sich die vorliegende Anmeldung bezieht, ist auch in der WO 2005/063372 und in der DE 103 61 003 B3 gegeben.

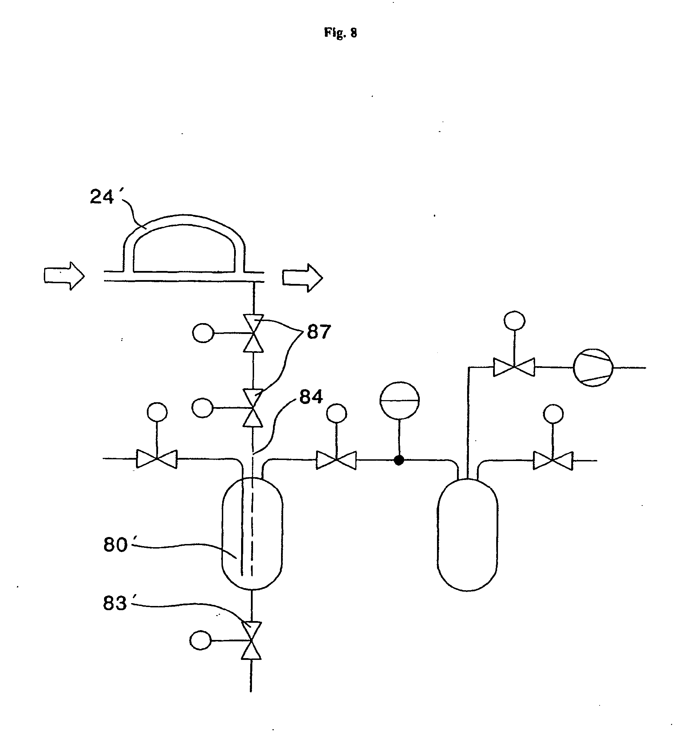

WO 2002/09220 beschreibt eine Reaktoranordnung zur Analyse von chemischen Reaktionen. Figur 8 offenbart dabei zwei parallel geschaltete Reaktorsysteme. Dabei wird das Gas" welches aus dem Gas-Flüssig-Trenner abgezogen wird, nicht analysiert. Die US 2005/169815 betrifft eine Weiterentwicklung der WO 2002/09220, wobei hier weniger Bezug auf Gas-Abscheider genommen wird, sondern vielmehr auf Gassammelbehälter.

Eine der erfindungsgemäßen Aufgaben ist es, eine Vorrichtung und ein Verfahren bereitzustellen, mit deren Hilfe eine effektive Handhabung und Analyse von Multikomponenten-Mischungen aus chemischen Prozessanlagen beziehungsweise deren Reaktionsräumen vorgenommen werden kann, insbesondere für parallel durchgeführte Testreaktionen mit geringen Produktvolumina.

Die Vorrichtung und das Verfahren sollen es gemäß eines weiteren Aspektes der erfindungsgemäßen Aufgabe ermöglichen, dass bei der Quantifizierung der einzelnen Komponenten beziehungsweise Gruppen von Komponenten eine möglichst genaue und konsistente Massenbilanz erzielt werden kann. Weiterhin ist es ein erfindungsgemäßes Ziel, eine Vorrichtung und ein Verfahren zu entwickeln, welches mittels einer Computersteuerung halbautomatisch beziehungsweise vollautomatisch durchgeführt werden kann. Darüber hinaus soll mit Hilfe der Vorrichtung und des Verfahrens eine besonders zeitsparende Prozessführung ermöglicht werden.

Die hier genannten und weitere Aufgaben werden dadurch gelöst, dass eine Vorrichtung zur Handhabung und Analyse von Multikomponenten-Gemischen gemäß Anspruch 1 bereitgestellt wird, welche zumindest folgende Komponenten umfasst:

(a) zumindest zwei parallele Reaktionsräume (20, 20'01, 20'02, ...);

(b) pro Reaktionsraum zumindest eine reaktionsraumausgangsseitige Verbindung zu zumindest einem Hochdruck-Abscheider (80);

(c) pro Reaktionsraum zumindest einen Hochdruck-Abscheider (80);

(d) pro Hochdruck-Abscheider (80) zumindest einen mit diesem über eine Verbindung verbundenen Niederdruck-Abscheider (80').

Dabei weisen alle Hochdruck-Abscheider (80) zumindest eine Ausgangsverbindung (90) für gasförmige Komponenten auf, die mit einer Einheit zur Analyse verbunden ist.

In einer bevorzugten Ausführungsform weist die Vorrichtung im reaktionsraumausgangsseitigen Hochdruckbereich, d.h. zwischen Ausgang des Reaktionsraumes (20, ...) und Hochdruck-Abscheider (80) oder in einer im Hochdruckbereich zum Hochdruck-Abscheider führenden Verbindung jeweils pro Einheit "Reaktionsraum-Hochdruck-Abscheider" eine Verbindung zu einem (Druck-) Haltegas (52) sowie, weiter bevorzugt, eine Verbindung zu einem (Druck-) Regelfluid (60) auf.

Erfindungsgemäß weist jeder Niederdruck-Abscheider (80') eine Ausgangsleitung (83') für flüssige Komponenten auf, sowie, J bevorzugt, eine Zuleitung für Inert- bzw. Stripgas (94) sowie, erfindungsgemäß, eine Ausgangsleitung (90) für gasförmige Komponenten.

In einer bevorzugten Ausführungsform ist die Ausgangsleitung des Niederdruck-Abscheiders für gasförmige Komponenten mit zumindest einem Ventil (35) und/oder einer Leitung zu einem Gas-Sammelbehälter (38) verbunden.

Dabei ist es besonders bevorzugt, dass in einer parallelen Anordnung von zumindest zwei Niederdruck-Abscheidern (80') pro zumindest zwei Niederdruck-Abscheidern jeweils zumindest zwei Verbindungen zu einem gemeinsamen Gas-Sammelbehälter (38) vorliegen.

In einer weiteren bevorzugten Ausführungsform steht jeder Gas-Sammelbehälter (38) mit einem Drucksensor (36) oder einer Vakuumpumpe (39) oder einer Ausgangsleitung (90') oder einer Kombination hierzu in Verbindung.

Die oben genannten Aufgaben werden auch durch ein Verfahren gemäß Anspruch 8 zur Handhabung von Multikomponenten-Gemischen gelöst, welches unter Verwendung der erfindungsgemäßen Vorrichtung durchgeführt wird und welches zumindest die folgenden Schritte umfasst:

(iii) Abscheiden von zumindest einer Multikomponenten-Mischung, die aus zumindest zwei parallelen Reaktionsräumen (20) austritt, in jeweils einen diesen zugeordneten Hochdruck-Abscheider (80), welcher in Wirkverbindung mit einem Niederdruck-Abscheider (80') steht;

(iv) Ausschleusen von leicht flüchtigen gasförmigen Komponenten aus zumindest einem Hochdruckbereich eines Hochdruck-Abscheiders (80) über eine Ausgangsverbindung (90) für gasförmige Komponenten, die zu einem Analysesystem führt.

Dabei ist es bevorzugt, dass die Ausgangsverbindung (90) zumindest einen Restriktor umfasst. Dabei ist es weiter bevorzugt, dass zumindest zwei Reaktionsräume, Hoch- und Niederdruck-Abscheider sowie Ausgangsverbindungen parallel geschaltet sind.

In einer bevorzugten Ausführungsform umfasst das Verfahren zumindest einen weiteren der folgenden Schritte:

(i) Öffnen eines Ventils zwischen zumindest einem Gas-Sammelbehälter, der mit einem Niederdruck-Abscheider verbunden ist, und einer Vakuumpumpe und Abpumpen von zumindest Teilen der im Gas-Sammelbehälter befindliche Gasphase;

(ii) Schließen des Ventils zwischen Gas-Sammelbehälter und Vakuumpumpe bei Erreichen eines vorgegebenen Unterdrucks;

(v) Öffnen der Verbindung von Hochdruck-Abscheider zu Niederdruck-Abscheider bei Erreichen eines vorbestimmten Befüllungsgrades eines Hochdruck-Abscheiders und Befördern des im Hochdruck-Abscheider befindlichen Fluides in den Niederdruck-Abscheider;

(vi) Einleiten von Inertgas/Stripgas in das im Niederdruck-Abscheider befindliche Fluid;

(vii) Weiterleiten des in den Niederdruck-Abscheider eingeleiteten Inertgases/Stripgases und/oder der gasförmigen Komponenten aus dem Niederdruck-Abscheider in den Gas-Sammelbehälter;

(viii) Entleeren des im Niederdruck-Abscheider gesammelten flüssigen Fluids über eine Ausgangsleitung;

(ix) Durchführen des Verfahrens mittels einer automatischen Prozess-Steuerung;

(x) Online-Analyse von gasförmigen Verbindungen, die aus dem Hochdruckbereich über die Ausgangsverbindung (90) ausgeschleust werden;

(ix) Durchführung des Verfahrens mittels einer automatischen Prozess-Steuerung;

(x) Aufnahme des aus dem Niederdruck-Abscheider ausgeschleusten flüssigen Fluids mittels eines automatischen Proben-Sammelsystems und/oder Analyse des Produktgemisches.

Die leicht flüchtigen gasförmigen Gase, welche am Hochdruck-Abscheider abgezogen und über die Ausgangsverbindung (90) der Einheit zur Analyse (66) zugeführt werden, werden auch als Heißgas bzw. als Permanentgas bezeichnet. Vorzugsweise enthalten diese leicht (oder leichter) flüchtigen Gase zumindest eine der folgenden Kompo-nenten: Wasserstoff, Methan, Kohlenmonoxid; $C_2$-Komponenten Ethan, Ethen, Ethin; Trägergase; $SO_x$ oder $NO_x$. Durch eine geeignete Prozessführung, insbesondere durch Restriktorelemente in der Ausgangsverbindung (90) wird der Austritt von gasförmigen Komponenten, die eine geringere Flüchtigkeit aufweisen, an dieser Stelle weitgehend unterbunden, so dass diese Komponenten zunächst im Fluid gelöst bleiben. Dies bedeutet, dass das im Hochdruck-Abscheider angesammelte Fluid zunächst als Matrix fungiert, in welcher gasförmige Komponenten entsprechend ihrer Löslichkeit unter den jeweiligen Prozessbedingungen teilweise zurückgehalten werden.

In einer weiter bevorzugten Ausführungsform des Verfahrens werden die leicht flüchtigen gasförmigen Komponenten, die über die Verbindung (90) aus dem Hochdruckbereich (80) abgezogen werden, direkt einer Einheit zur Analyse (66) zugeführt, um die Zusammensetzung der leichter flüchtigen Komponenten qualitativ und quantitativ zu bestimmten. Zur Bestimmung des Wasserstoffgehaltes sowie weiterer im Produktgas-Strom enthaltenen Komponenten kann beispielsweise ein Gas-Chromatograph eingesetzt werden, der vorzugsweise mit einem Wärmeleitfähigkeits-Detektor ausgestattet ist. Andere Detektionsmethoden wie beispielsweise Kohlenstoffanalysator, IR, UV VIS, Raman - sind dabei auch denkbar.

Durch Abziehen von leicht flüchtigen gasförmigen Komponenten bereits am Hochdruck-Abscheider (80) wird die Analyseeinheit, die erfindungsgemäß mit dem Niederdruck-Abscheider (80') bzw. dem Gas-Sammelbehälter (38) verbunden ist, entlastet. Weiterhin erfordern leicht flüchtige Gase (z.B. $H_2$, $H_2S$, Methan, Ethan, Ethen u.a.) vorzugsweise andere Analysemethoden (z.B. TCD, FID, Wärmeleitfähigkeits-Detektoren) als höher flüchtige Gase (Ionisation, z.B. FID). Insgesamt wird durch dieses Auftrennen der zu analysierenden Gasströme ein Sammeln von Produktfluid-Strömen auf der Niederdruckseite, insbesondere in Gas-Sammelbehältern, wesentlich verbessert. Weiterhin wird die Analyse und erreichbare Massenbilanz durch diese Verfahrensführung insgesamt genauer.

Im Folgenden sollen die wesentlichen technischen Begriffe wie sie in der vorliegenden Erfindung verwendet werden, und soweit sie nicht unmittelbar aus dem Fachwissen folgen, erläutert werden.

Unter einer *"Gasphasen-Reaktion"* im Sinne der vorliegenden Erfindung ist eine chemische Reaktion zu verstehen, bei welcher alle Edukte und Produkte unter Reaktionsbedingungen als Gase vorliegen.

Unter einer *"Flüssigphasen-Reaktion"* im Sinne der vorliegenden Erfindung ist eine chemische Reaktion zu verstehen, bei welcher alle Edukte und Produkte unter Reaktionsbedingungen flüssig sind.

Unter einer *"Mehrphasen-Reaktion"* im Sinne der vorliegenden Erfindung ist eine chemische Reaktion zu verstehen, die unter Reaktionsbedingungen in Anwesenheit zumindest zweier verschiedener Phasen, die nicht vollständig miteinander mischbar sind, abläuft. Die Phasen können dabei alle oder teilweise oder einzeln flüssig und/oder fest und/oder gasförmig sein. Die Phasen können Edukte oder Produkte oder beides sein.

Unter dem Begriff *"Mehrkomponenten-Gemisch"* ist im Sinne der vorliegenden Erfindung jede Mischung von zumindest zwei Komponenten zu verstehen, welche durch physikalische oder physikalisch-chemische Verfahren, oder Kombinationen hiervon, zumindest teilweise voneinander getrennt werden können. Hierunter sind insbesondere Mischungen von zumindest zwei nicht vollständig miteinander mischbaren flüssigen Phasen oder Mischungen von zumindest einer gasförmigen Phase und zumindest einer flüssigen Phase sowie Emulsionen, Dispersionen oder Suspensionen zu verstehen.

Unter einer *"nicht volumenkonstanten Reaktion"* im Sinne der vorliegenden Erfindung ist jede chemische Reaktion zu verstehen, bei der sich die Molzahl an gasförmigen Substanzen pro Formelumsatz ändert, und/oder das Volumen auf Grund einer Umwandlung fest/fest, fest/flüssig, flüssig/flüssig, flüssig/ gasförmig oder gasförmig/gasförmig (bei nicht idealen Gasen) zu- bzw. abnimmt.

Unter dem Begriff *"Hochdruck"* ist im Sinne der vorliegenden Erfindung jeder Druck zu verstehen, der höher ist als der Druck, welcher auf der stromabwärts gerichteten Seite eines Bauteils herrscht. Im allgemeinen liegt der Druck auf der Hochdruckseite der Vorrichtung, und dabei insbesondere im Hochdruck-Abscheider, in einem Bereich von 5 bis 500 bar. Bevorzugt ist dort ein Druck im Bereich von 20 bis 250 bar und weiter bevorzugt ist ein Druck im Bereich von 90 bis 150 bar. Bezüglich des Druckbereichs auf der Hochdruckseite der Apparatur beziehungsweise von Reaktor und Hochdruck-Abscheider sind nach oben keine festen Grenzen gesetzt, wobei jedoch durch die Wahl von bestimmten Materialien sowie konstruktiver Merkmale eine bestimmte Grenze bezüglich der Druck-Obergrenze vorliegen kann, welche der Fachmann unter Berücksichtigung der Materialien erkennt.

Unter dem Begriff *"Niederdruck"* ist im Sinne der vorliegenden Erfindung ein Druck zu verstehen, der geringer ist als der Druck auf der stromaufwärts (in Bezug auf den Eduktstrom) gerichteten Seite eines Bauteils. Der Druck auf der Niederdruckseite der Vorrichtung, d.h. vorzugsweise stromabwärts des Hochdruck-Abscheiders, liegt vorzugsweise zumindest 0,5 bar tiefer als der Druck auf der Hochdruckseite der Vorrichtung. Bevorzugt liegt der Druck auf der Niederdruckseite in einem Bereich von 0 bis 20 bar, weiter bevorzugt in einem Bereich von 0 bis 10 bar. Ein solcher Druck herrscht vorzugsweise (auch) im Niederdruck-Abscheider.

Eine *"leicht flüchtige gasförmige Komponente"* ist ein Gas, welches bereits im Hochdruck-Abscheider im gasförmigen Zustand vorliegt oder in diesen übergeht.

Ein *"Fluid"* im Sinne der vorliegenden Erfindung ist jede Substanz, bei welcher sich die elementaren Bestandteile, welche die Substanz aufbauen, beispielsweise Elemente oder Moleküle, aber auch Agglomerate davon, gegeneinander bewegen, und insbesondere keine fest bleibende Fernordnung zueinander aufweisen. Darunter fallen insbesondere Flüssigkeiten oder Gase, aber auch Wachse, Öle, Dispersionen, Fette, Suspensionen, Schmelzen, pulverförmige Feststoffe usw. Sofern das Medium in flüssiger Form vorliegt, werden auch mehrphasige flüssige Systeme als Fluide verstanden.

Unter dem Begriff *"Ventil"* ist im Sinne der vorliegenden Erfindung jedes Bauteil zu verstehen, welches es erlaubt, den Fluidstrom zu verringern, einschließlich diesen zum Erliegen zu bringen.

Unter einer *"gemeinsamen Eduktzufuhr"* im Sinne der vorliegenden Erfindung ist jede Art der Zufuhr zu verstehen, in welcher zumindest ein Edukt mindestens zwei räumlich mit einer Zufuhr verbundenen Reaktionsräumen zugeführt wird, und zwar so, dass die Reaktionsräume gleichzeitig und gemeinsam dem zumindest einen Edukt ausgesetzt sind.

Unter einem *"Eduktgas"* im Sinne der vorliegenden Erfindung ist jedes Gas oder jede Gasmischung zu verstehen, die den Reaktionsräumen, oder Teilmengen hiervon, (über eine gemeinsame Eduktzufuhr) zugeführt werden kann. Das Eduktgas kann, muss aber nicht, ein Inertgas enthalten und/oder eine Beimischung, die als interner Standard zur Bestimmung bestimmter Eigenschaften (beispielsweise Gasfluss etc.) dienen kann.

Das Eduktgas enthält bevorzugt zumindest eine Komponente, die an der zu untersuchenden chemischen Reaktion teilnimmt. Das Eduktgas kann auch flüssige Komponenten enthalten.

Unter einem *"Produkt"* im Sinne der vorliegenden Erfindung ist jedes Fluid oder jede Fluidmischung zu verstehen sowie jede disperse Phase (die gegebenenfalls auch feste Bestandteile enthalten kann), welches/welche aus zumindest einem Reaktionsraum abgeführt und analysiert werden kann. Das Produkt kann, muss aber nicht, Edukt enthalten. Das Produkt kann, muss aber nicht, ein fluides Reaktionsprodukt der Umsetzung, welche in einem Reaktionsraum stattgefunden hat, enthalten.

In einer bevorzugten Ausführungsform ist das Produkt ein Gas oder eine Gasmischung, oder eine Flüssigkeit, die ein Gas physikalisch oder chemisch gelöst enthält. Ist das Produkt ein Gas oder eine Gasmischung, so wird es als *"Reaktionsgas"* bezeichnet.

Unter einer *"gemeinsamen Eduktflüssigkeitszufuhr"* im Sinne der vorliegenden Erfindung ist jede Art der Zufuhr zu verstehen, in welcher zumindest eine Eduktflüssigkeit mindestens zwei räumlich miteinander verbundenen Reaktionsräumen zugeführt wird, und zwar so, dass zumindest zwei Reaktionsräume der zumindest einen Eduktflüssigkeit gleichzeitig und gemeinsam ausgesetzt sind. Der Reaktionsraum ist in diesem Fall bevorzugt ein Gas-Flüssig-Fest-Reaktor. Die gemeinsame Eduktflüssigkeitszufuhr liegt bevorzugt zusätzlich neben der oben offenbarten gemeinsamen Eduktzufuhr vor. Eine Eduktflüssigkeitszufuhr wird bevorzugt bei Mehrphasen-Reaktionen eingesetzt.

Unter einem *"Restriktor"* im Sinne der vorliegenden Erfindung ist jedes Bauteil zu verstehen, welches beim Durchströmen mit einem Fluid diesem gegenüber einen messbaren Strömungswiderstand darstellt. *"Messbar"* bedeutet dabei, dass der Strömungswiderstand eines jeden Restriktors zumindest um mehr als (den Faktor 2), bevorzugt um zumindest um mehr als den Faktor 5, weiter bevorzugt um mehr als den Faktor 10 größer ist als der Strömungswiderstand eines jeden anderen Bauteils (Komponente) in der Vorrichtung, ausgenommen andere Restriktoren.

Werden Restriktoren reaktionsraumeingangsseitig eingesetzt, so soll im erfindungsgemäßen Verfahren bevorzugt ein Druckverlust von zumindest 2 bar erzeugt werden, weiter bevorzugt ein Druckverlust von zumindest 5 bar, weiter bevorzugt von zumindest 10 bar. Dabei ist der Druckverlust die Differenz *"Druck vor dem Reaktionsraum"* abzüglich des Druckes nach dem Reaktionsraum.

Werden die Restriktoren reaktionsraumausgangsseitig eingesetzt, und dienen diese damit gegebenenfalls neben der Fluidgleichverteilung auch zum *"Entspannen"* des in den Reaktionsräumen herrschenden Drucks auf den Druck der Komponenten, die den Reaktionsräumen gegebenenfalls nachgeschaltet sind, so soll im erfindungsgemäßen Verfahren bevorzugt ein Druckverlust von mindestens 10 bar erfolgen, bevorzugt von mindestens 20 bar.

Pluralitäten von Restriktoren werden bevorzugt entsprechend ihrer funktionalen Zusammengehörigkeit als *"Stets"* (oder *"Gruppen"* gruppiert. Ein Set ist dabei bevorzugt eine Pluralität von mindestens zwei Restriktoren, die räumlich zusammen gehören können (oder auch nicht), die aber in jedem Fall innerhalb der erfindungsgemäßen Vorrichtung die gleiche Funktionalität aufweisen. So stellen beispielsweise alle eingangs- oder alle ausgangsseitig zu den Reaktionsräumen oder zu Teilmengen von Reaktionsräumen gehörigen Restriktoren ein solches Set dar. Entsprechend umfasst die erfindungsgemäße Vorrichtung bevorzugt ein Set von Restriktoren, die jeweils der Eduktflüssigkeitszufuhr oder der Regelfluidzufuhr oder der Haltegaszufuhr oder den Ausgangsverbindungen (90) für gasförmige Komponenten zugeordnet sind.

Als Restriktoren im Sinne der vorliegenden Erfindung können beispielsweise Metallplatten mit Bohrungen, Sintermetallplatten, Lochblenden *("pinholes"),* mikrogefräste Kanäle *("micromachined channels"),* Kapillaren und/oder Fritten (poröse Materialien, insbesondere gesinterte Keramikfritten) vorgesehen sein. Diese sollen bevorzugt den Fluss des einströmenden Fluides kontrollieren und eine weitgehende Gleichverteilung der einströmenden Fluide über die einzelnen Verbindungen/Kanäle hinweg gewährleisten *("passive"* Restriktoren).

Eine *"Verbindung",* Zufuhr, Verbindungsleitung, Zuleitung oder Ableitung im Sinne der vorliegenden Erfindung ist jedes Mittel, welches eine fluidische Kommunikation zwischen zwei Punkten innerhalb der Vorrichtung erlaubt, und die nach außen (außerhalb der Vorrichtung) bezüglich des Austausches von Stoffen abgeschlossen ist. Bevorzugt ist die Verbindung dabei fluiddicht, weiter bevorzugt fluiddicht auch bei hohen Drucken. Weiter bevorzugt erfolgt die Verbindung über die unten beschriebenen Kanäle, Rohre oder Kapillaren.

Der Begriff *"Kanal"* im Sinne der vorliegenden Erfindung beschreibt eine durch einen Körper, bevorzugt einen massiven Körper beliebiger Geometrie, bevorzugt einen Rundkörper, einen Quader, eine Scheibe oder eine Platte, hindurchlaufende Verbindung zweier an der Körperoberfläche vorliegender Öffnungen, die insbesondere den Durchtritt eines Fluids durch den Körper erlaubt.

Ein *"Rohr"* im Sinne der vorliegenden Erfindung ist ein Kanal, bei welchem ein durchgehender Hohlraum gebildet wird, und die Geometrie der Außenseite des Rohres im wesentlichen der den Hohlraum definierenden Geometrie der Innenseite folgt.

Eine *"Kapillare"* kann im Wesentlichen als ein Spezialfall eines Rohres angesehen werden, mit dem Unterschied, dass in einer Kapillare - gemäß der oben bezüglich *"Restriktoren"* gegebenen Vorgaben - bestimmte Dimensionen erfüllt sein müssen. Eine Kapillare im Sinne der vorliegenden Erfindung kann bevorzugt gleichzeitig als *"Verbindung"* und als *"Restriktor"* fungieren.

Kanal, Rohr oder Kapillare können vorliegend jede beliebige Geometrie aufweisen. Bezüglich des von Kanal, Rohr oder Kapillare im Inneren gebildeten Hohlraums kann eine über die Länge von Kanal, Rohr oder Kappillare veränderliche Querschnittsfläche oder vorzugsweise eine konstante Querschnittsfläche vorliegen.

Der Innenquerschnitt kann beispielsweise einen ovalen, runden oder polygonalen Umriss mit geraden oder gebogenen Verbindungen zwischen den Eckpunkten des Polygons aufweisen. Bevorzugt sind ein runder oder ein gleichseitiger polygonaler Querschnitt.

Unter einem *"Haltegas"* (holding gas) im Sinne der vorliegenden Erfindung ist jedes Gas zu verstehen, mit welchem die Ausgangsseiten von zumindest zwei Reaktionsräumen über eine gemeinsame Haltegaszufuhr beaufschlagt werden können, so dass der Druck im Reaktionsraum gegenüber dem Druck ohne Haltegas erhöht ist.

Als Haltegas kann jedes Gas oder jede Gasmischung eingesetzt werden, das oder die mit den aus dem Reaktionsraum fließenden Produkten sowie den Materialien der Vorrichtung, mit denen es in Berührung kommt, nicht reagiert, oder nur so reagiert, dass die zu untersuchende Reaktion nicht wesentlich beeinträchtigt wird. Bevorzugt wird als Haltegas ein inertes Gas oder eine inerte Gasmischung eingesetzt. Besonders bevorzugt sind Stickstoff, sowie die Edelgase des Periodensystems der chemischen Elemente, sowie sämtliche Mischungen hiervon.

Der erfindungsgemäße Zweck des Haltegases ist es, Volumenschwankungen in den einzelnen Reaktionsräumen beim Vorliegen zumindest einer nicht volumenkonstanten Reaktion in zumindest einem der Reaktionsräume zu vermeiden oder zumindest zu minimieren. Ohne Beaufschlagung mit einem Haltegas können Volumenschwankungen auf den reaktionsraumausgangsseitigen Teil der Vorrichtung "durchschlagen".

Unter einem "Regelfluid" im Sinne der vorliegenden Erfindung ist jedes Gas oder jede Flüssigkeit, oder jede Mischung hiervon, zu verstehen, mit welchem/welcher die Produktflüsse aus zumindest zwei Reaktionsräumen über eine gemeinsame Regelfluidzufuhr beaufschlagt werden können.

Als Regelfluid kann jedes Fluid oder jede Fluidmischung eingesetzt werden, das oder die mit den aus dem Reaktionsraum fließenden Produkten sowie den Materialien der Vorrichtung, mit denen es in Berührung kommt, nicht reagiert, oder nur so reagiert, dass die zu untersuchende Reaktion nicht wesentlich beeinträchtigt wird.

Das Regelfluid kann dabei entweder flüssig oder gasförmig sein. Handelt es sich bei den Reaktionen im Reaktionsraum um Gasphasenreaktionen, so ist als Regelfluid ein Regelgas bevorzugt. Wird im Reaktionsraum eine Flüssigphasenreaktion durchgeführt, so wird entsprechend eine Regelflüssigkeit bevorzugt.

Ist das Regelfluid ein Gas, so gilt die oben angegebene Offenbarung bezüglich des Haltegases entsprechend. Als inerte Flüssigkeiten werden Wasser und Lösungsmittel sowie auch höherviskose oder nicht-Newtonsche Flüssigkeiten wie beispielsweise inerte Öle bevorzugt. Überkritische Gase werden für die Zwecke der vorliegenden Erfindung auch als Flüssigkeiten angesehen.

Im Gegensatz zur Haltegaszufuhr, welche es zur Aufgabe hat, mögliche Volumenschwankungen in den einzelnen Reaktionsräumen auszugleichen, ist es die Aufgabe der Regelfluidzufuhr, die Fluidflüsse durch die einzelnen Reaktionsräume gemeinsam und gleichzeitig auf einen vorgegebenen gleichen Wert einzuregeln (Reaktionsraumsflussregelung), und zwar ohne dabei den Druck in den Reaktionsräumen zu verändern.

Dies wird bevorzugt dadurch erreicht, dass in einem Massendurchflussregler der Regelfluidzufuhr ein vorbestimmter gesamter Regelfluidfluss ($F^R_{ges}$) eingestellt wird. Dadurch, dass sich bei der Regelfluidzufuhr zwischen dem Massendurchflussregler und der Pluralität von räumlich voneinander getrennten Verbindungen zu den einzelnen Reaktionsräumen jeweils bevorzugt ein Restriktor befindet, und die Restriktoren alle den gleichen oder ähnliche Strömungswiderstand/widerstände aufweisen, wird das gesamte Regelfluid in gleichen Flüssen auf die einzelnen Reaktionsräume aufgeteilt.

Wird beispielsweise im Massendurchflussregler der Regelfluidzufuhr ein Fluss von 1,5 l/h eingestellt, und verzweigt sich die Regelfluidzufuhr nach dem Massendurchflussregler in drei separate Verbindungen (mit jeweils einem Restriktor), die zu drei räumlich voneinander getrennten Reaktionsräumen führen, so ergibt sich nach jedem Restriktor ein Fluss von ca. 0,5 l/h.

Bezüglich der so mit Hilfe eines Massendurchflussreglers, bevorzugt mit Hilfe eines thermischen Massendurchflussreglers, eingestellten Flüsse besteht im Prinzip keine Beschränkung. Bevorzugt wird der Fluss des Regelfluids so eingestellt, dass Edukt von der Eduktzufuhr durch die Reaktionsräume, oder Teilmengen hiervon, fließen kann. Weiter ist es bevorzugt, dass der Fluss zumindest eines Regelfluids 0,001 % bis 99,9 % des Flusses zumindest eines Eduktfluides beträgt, weiter bevorzugt 95 % bis 0,01 % desselben, weiter bevorzugt 90 % bis 0,1 %. Beträgt das Volumen der Reaktionsräume 0,1 bis 50 ml, so sind ist im Sinne der vorliegenden Erfindung Regelfluidflüsse von 0,5 bis 10 l/h bevorzugt.

Da diese Flüsse bereits sozusagen von der Regelfluidzufuhr "bereitgestellt" werden, vermindert sich der von der Eduktzufuhr bereitzustellende Fluss, und damit der Fluss durch die Reaktionsräume, um jeweils um diesen Betrag. Wird in der oben beschriebenen "Anlaufphase" ein konstanter Regelfluidfluss eingestellt, so kann durch Erhöhen oder Erniedrigen dieses Regelfluidflusses der Fluss an Edukt durch den Reaktor jeweils erniedrigt oder erhöht werden, ohne dass hiervon der Druck in den Reaktionsräumen signifikant oder überhaupt beeinträchtigt würde.

Dementsprechend kann durch Erhöhen (Erniedrigen) des Regelgasflusses aus der Regelfluidzufuhr der Eduktfluss bei einer Gasphasenreaktion erniedrigt (erhöht) werden, und es kann durch Erhöhen (Erniedrigen) des Regelflüssigkeitsflusses aus der Regelfluidzufuhr der Eduktfluss bei einer Flüssigphasenreaktion erniedrigt (erhöht) werden.

Insgesamt ist es in dieser Ausführungsform also möglich, auf eine einfache Art und Weise, und insbesondere mit einem einzigen Massendurchflussregler, die durch alle Reaktionsräume fließende Fluidmenge auch während des Ablaufens der parallelen Reaktionen zu regulieren, und zwar ohne dadurch den in den Reaktionsräumen herrschenden Druck signifikant zu beeinflussen.

Unter einer gemeinsamen *"Haltegaszufuhr"* ist zu verstehen, dass jeder der zumindest zwei räumlich voneinander getrennten Reaktionsräume mit derselben Haltegaszufuhr verbunden ist. Es ist darüber hinaus auch denkbar, mehr als eine Haltegaszufuhr zu verwenden, unter der Maßgabe, dass die Reaktionsräume und die Haltegaszufuhren bevorzugt miteinander in stofflicher Verbindung stehen.

Ein *"Durchflussmesser"* im Sinne der vorliegenden Erfindung ist jedes Bauteil, welches den Fluidfluss, beispielsweise den gesamten Gasfluss eines Haltegases messen kann. Solche Bauteile sind dem Fachmann auch als *"flow indicator"* (*"FI"*) bekannt. Durchflussmesser, die auf einem thermischen Verfahren beruhen, sind dabei bevorzugt.

Ein *"Druckregler"* im Sinne der vorliegenden Erfindung ist jedes Bauteil, welches den Druck eines Fluids messen und, nach Vergleich mit einem vorgegebenen Soll- oder Schwellenwert, gegebenenfalls einregeln kann. Solche Bauteile sind dem Fachmann auch als *"pressure indicator control"* (*"PIC"*) bekannt.

Unter einem *"Massendurchfluss-Regler"* (mass flow controller) im Sinne der vorliegenden Erfindung ist jeder Mess- und Regelkreis zu verstehen, mit Hilfe dessen der Fluss eines Fluides gemessen und, gegebenenfalls nach Vergleich mit einem Sollwert, variabel eingestellt werden kann. Ein Massendurchfluss-Regler kann als ein aktiver Restriktor im oben beschriebenen Sinn angesehen werden. Ein Massendurchfluss-Regler ist dem Fachmann auch als *"FIC"* (flow indicator control) bekannt. Massendurchfluss-Regler im Sinne der vorliegenden Erfindung können sowohl für Flüssigkeiten als auch für Gase eingesetzt werden. Bevorzugt werden solche Massendurchfluss-Regler eingesetzt, die auf einem thermischen Messprinzip beruhen.

In bevorzugten Ausführungsformen der vorliegenden Erfindung werden die erfindungsgemäße Vorrichtung und das erfindungsgemäße Verfahren zur Entnahme von Multikomponenten-Gemischen aus Hochdruckreaktoren beziehungsweise aus Hochdruck-Systemen verwendet, in denen Stoffgemische prozessiert werden, die zum überwiegenden Teil in flüssiger Phase vorliegen. Im Sinne der vorliegenden Schrift bezieht sich der Begriff Flüssigphasen-Gemische auf Fluide, die überwiegend in flüssiger Phase vorliegen. Dabei ist es nicht ausgeschlossen, dass im Flüssigphasen-Gemisch auch ein gewisser Anteil an dispergiertem Festsoff - wie beispielsweise Polymerisationskatalysatoren - enthalten sein kann. Die Apparaturen in denen die Flüssigphasen-Gemische prozessiert werden, werden als Apparaturen für Flüssigphasen-Systeme bezeichnet.

Im Sinne der vorliegenden Schrift bezieht sich der Begriff *"Abscheider"* auf ein Gefäß, in welchem die flüssigen und gasförmige Komponenten oder zwei flüssige Komponenten des Produktfluids aus einem Reaktionsraum aufgetrennt werden. Es ist - insbesondere auf der Niederdruckseite - möglich, dass einige leicht flüchtige Komponenten in der flüssigen Phase verweilen beziehungsweise auch, dass einige mittel flüchtige Komponenten mittlerer Flüchtigkeit in die jeweilige Gasphase übertreten. Mittels Strippen (welches durch Einleiten von Inert-/Stripgas in die im Abscheider befindliche flüssige Phase erfolgt) können flüchtige Komponenten nahezu vollständig aus der flüssigen Phase in die Gasphase überführt werden. Eine möglichst vollständige Entfernung von unter diesen Bedingungen flüchtigen Komponenten aus der flüssigen Phase im Niederdruckabscheider ist vorteilhaft, da hierdurch Verluste durch unkontrolliertes Ausgasen bei der nachfolgenden Überführung der Flüssigkeit vermieden werden können.

Zu den wesentlichen Performance-Eigenschaften der erfindungsgemäßen Vorrichtung zählt beispielsweise eine hohe *"Stoffwiederfindungsrate"*. Konkrete Zahlenwerte für die Stoffwiederfindungsrate hängen von der Dimensionierung der Vorrichtung ab.

Kurze Beschreibung der Figuren:

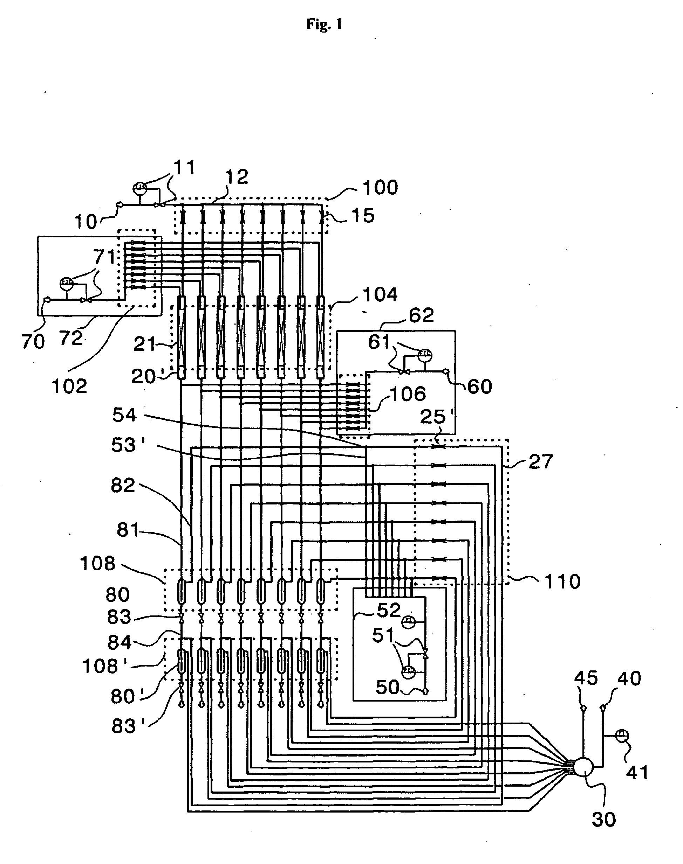

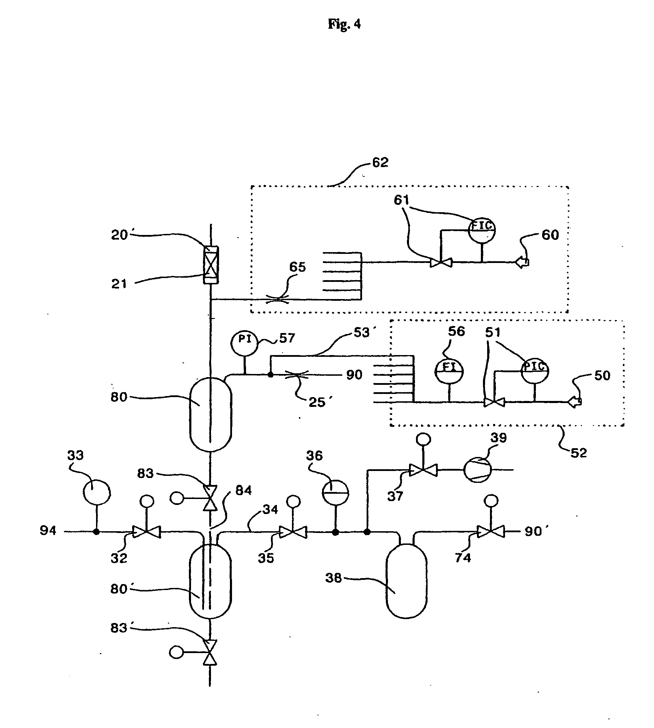

Figuren 1 - 3 zeigen prinzipiell aus der WO 2005/063372 bekannte Ausführungsformen, wohingegen Figuren 4 - 8 Ausführungsformen gemäß der vorliegenden Erfindung betreffen.

**Fig. 1** zeigt eine schematische Darstellung einer Apparatur mit acht parallel angeordneten Reaktionsräumen (20'), von denen jeder einzelne mit einer aus Hoch- und Niederdruck-Abscheider (80, 80') bestehenden Einheit verbunden ist. Die im Hochdruck-Abscheider (80) anfallenden gasförmigen Komponenten werden in dieser Ausführungsform über (hier nicht gezeigte Leitungen) in den Niederdruck-Abscheider eingeschleust. Die aus dem Niederdruck-Abscheider austretenden Gase werden über ein Ventil zu einer Analyseneinheit beziehungsweise zu einer Ausgangsleitung geleitet.

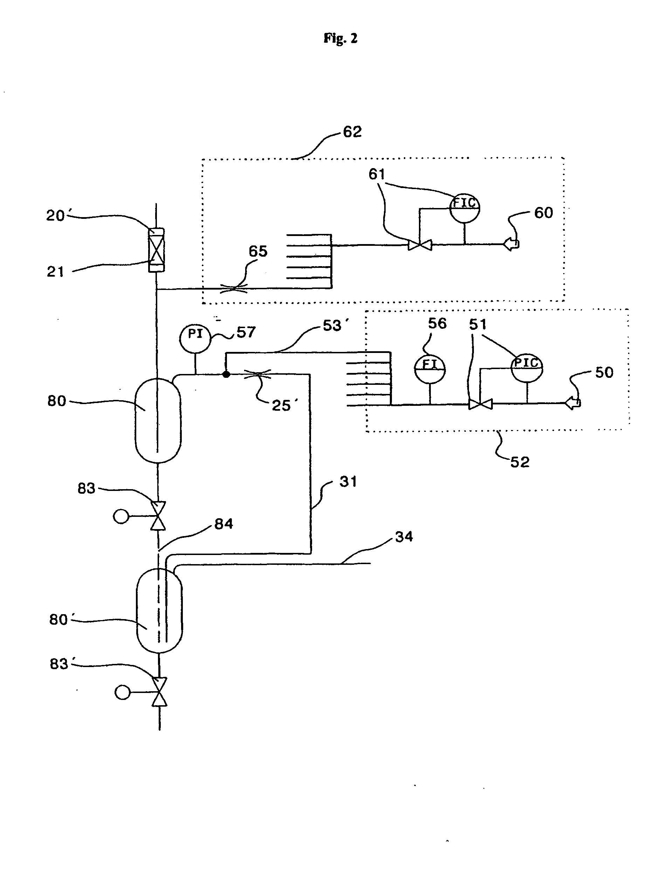

**Fig. 2** zeigt eine vergrößerte schematische Darstellung einer einzelnen Kombination von Hoch- und Niederdruck-Abscheider, welche in Figur 1 zu acht Einheiten parallel geschaltet sind. Dabei ist ein Hochdruck-Abscheider (80) mit einem Niederdruck-Abscheider (80') über eine Leitung für Flüssigkeiten (84) und über eine Leitung für gasförmige Komponenten (31) verbunden, wobei sich in der Leitung zwischen Hochdruck-Abscheider (80) und Restriktorelement (25') eine Verbindung (53') zu einem Druckhaltegas (50) befindet.

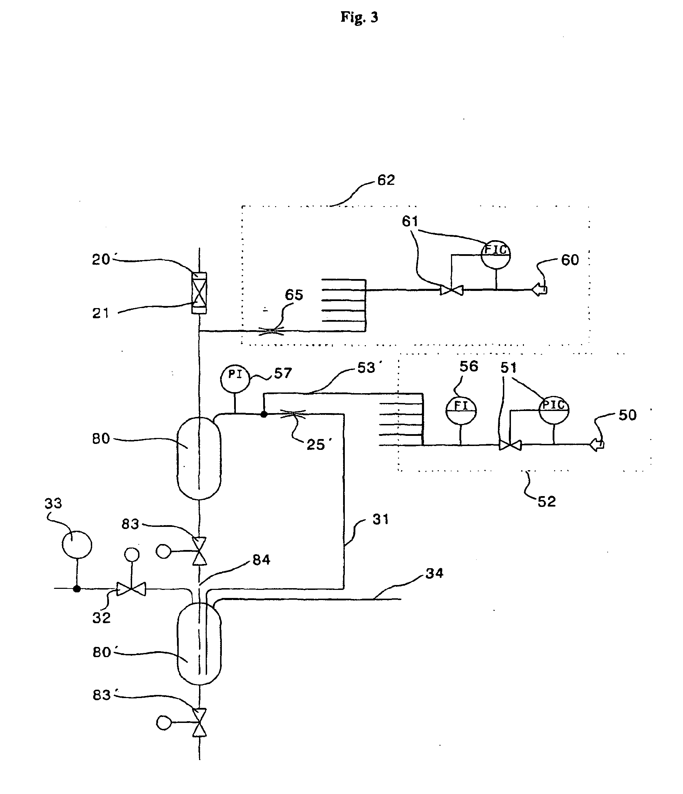

**Fig. 3** zeigt eine schematische Darstellung einer Vorrichtung zur Handhabung von Fluiden gemäß Fig. 2, bei welcher der Niederdruck-Abscheider (80') zusätzlich mit einem Massenflussregler (33) und einem Ventil (32) sowie mit einer Zuleitung für Inertgas bzw. Stripgas ausgestattet ist.

**Fig. 4** zeigt eine schematische Darstellung einer Vorrichtung zur Handhabung von Fluiden in einer erfindungsgemäßen Ausführungsform gemäß welcher eine Ausgangsleitung (90) für gasförmige Komponenten am Hochdruck-Abscheider (80) vorliegt und zu einer separaten Analyseneinheit führt. Die Ausgangsleitung für gasförmige Komponenten am Niederdruck-Abscheider steht über ein Ventil (35) in Verbindung mit einem Gas-Sammelbehälter (38).

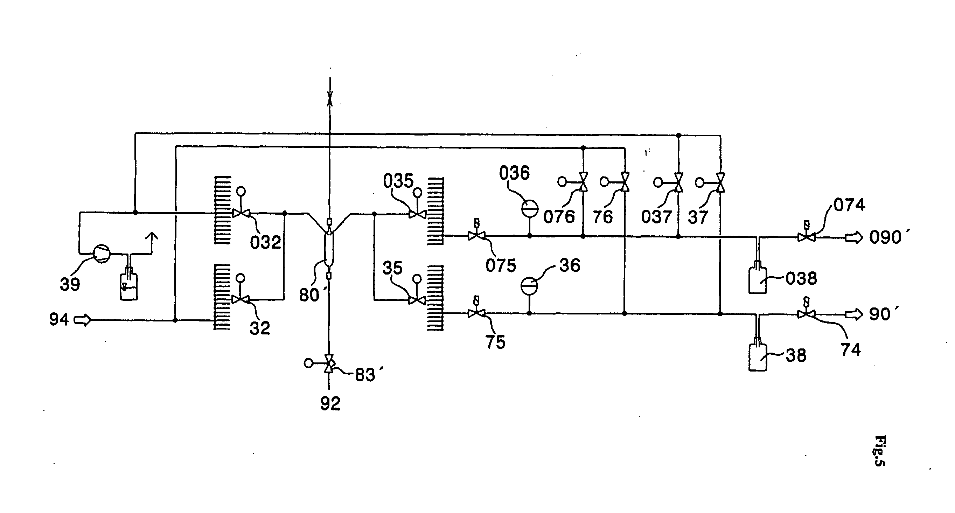

**Fig. 5** zeigt eine schematische Darstellung eines Teilbereichs einer Vorrichtung zur Handhabung von Fluiden in einer bevorzugten Ausführungsform einer für die Hochdurchsatz-Testung ausgelegten Apparatur mit 16 parallel geschalteten Reaktoren. Die Niederdruck-Abscheider (80') sind dabei über Ventile (35, 75) mit dem Gas-Sammelbehälter (38) verbunden.

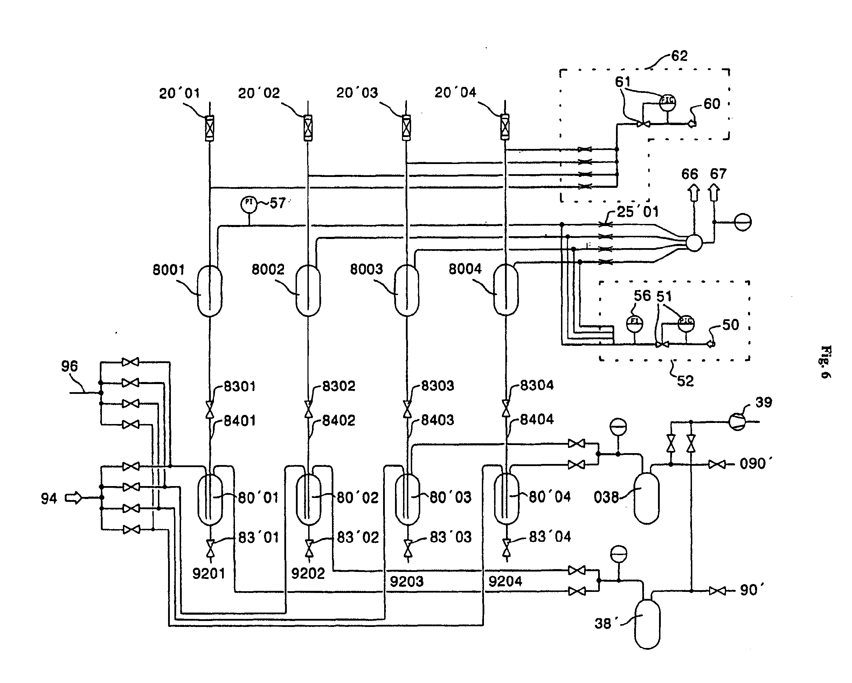

**Fig. 6** zeigt eine schematische Darstellung einer Apparatur, die vier parallel geschaltete Reaktoren umfaßt. Die Abscheidereinheiten (80') sind an Gas-Sammelbehälter (38, 38') angeschlossen, wobei die dargestellte Vorrichtung jeweils zwei Reaktoren pro Gas-Sammelbehälter aufweist. Jeder Hochdruck-Abscheider (80) verfügt über eine Ableitung (90) für gasförmige Komponenten.

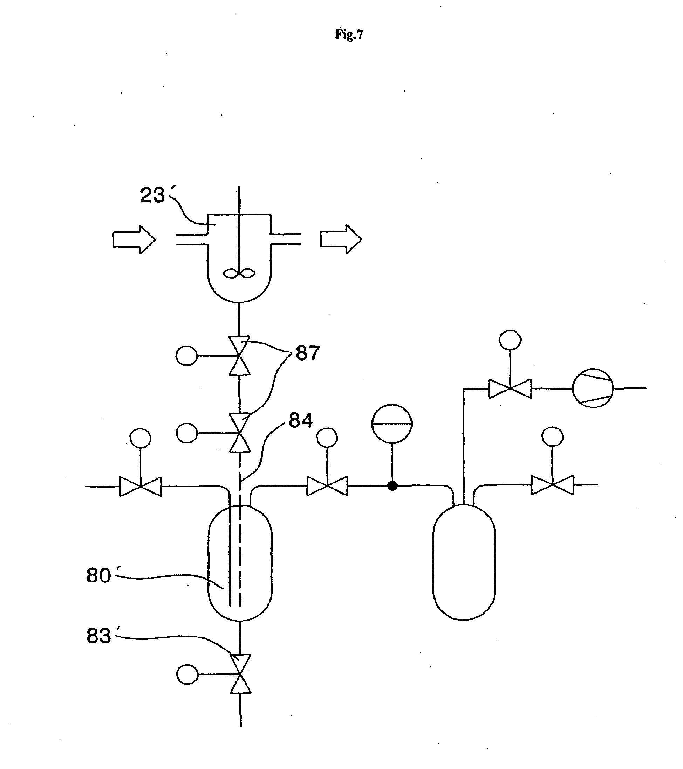

**Fig. 7** zeigt eine schematische Darstellung einer Vorrichtung, bei welcher die Vorrichtung zur Handhabung von Multikomponenten-Gemischen über eine Schleuse (87) an einen kontinuierlich betriebenen Flüssigphasen-Reaktor (23') angeschlossen ist.

**Fig. 8** zeigt eine schematische Darstellung eines Loop-Reaktors (24') mit Anschlusselement, welches eine Verbindungsstelle zu einer Abscheidevorrichtung (80) darstellt.

Die erfindungsgemäße Vorrichtung und das erfindungsgemäße Verfahren werden bevorzugt in Verbindung mit Testständen im Laborbereich oder in Pilotanlagen eingesetzt. Ein Einsatz von parallel betriebenen Reaktoren im batch- oder im kontinuierlichen Betrieb zur Herstellung oder Verarbeitung von Chemikalien im Industrie-Maßstab ist allerdings auch möglich.

Die Vorrichtung und das Verfahren zur Handhabung von Multikomponenten-Gemischen werden bevorzugt in Verbindung mit Hochdruck-Prozessen eingesetzt.

Mit Hilfe der erfindungsgemäßen Vorrichtung und des erfindungsgemäßen Verfahrens kann die Handhabung von Multikomponenten-Gemischen in verbesserter Weise bevorzugt parallel durchgeführt werden. Die in den Reaktoren vorzugsweise parallel durchgeführten Reaktionen können dabei gleich oder verschieden sein.

Hieraus ergibt sich auch die bevorzugte Anwendung der Erfindung auf dem Gebiet der Hochdurchsatz-Forschung und der kombinatorischen Chemie. Besonders bevorzugt kann die Erfindung bei der Untersuchung von Multikomponenten-Gemischen angewandt werden, die bei Experimenten mit Katalysatoren anfallen. Hierbei ist insbesondere die Vorrichtung, umfassend einen Gas-Sammelbehälter (38) auf der Niederdruckseite in Verbindung mit der Ausgangsleitung (90) für leicht flüchtige gasförmige Komponenten auf der Hochdruckseite bevorzugt, da durch diese Anordnung auch geringe Mengen an Produktfluid, wie diese beim kombinatorischen Testen typischerweise auftreten, mit hoher Präzision analysiert und mengenbilanziert werden können.

In einer bevorzugten Ausführungsform werden die Vorrichtung und das Verfahren zur Handhabung von Multikomponenten-Gemischen in Verbindung mit Apparaturen zur Testung von Feststoff-Katalysatoren eingesetzt, die mit einem Fluidstrom, insbesondere mit einem Gemisch von Fluiden, kontaktiert werden.

Die Erfindung wird vorzugsweise für Reaktionen eingesetzt, die nicht volumenkonstant sind und/oder für Reaktionen, bei denen Fluidflüsse durch zumindest zwei räumlich voneinander getrennte Reaktionsräume auf möglichst einfache Weise für alle Reaktionsräume oder für zusammengehörige Teilmengen derselben, gemeinsam geregelt werden sollen. Hierzu dienen insbesondere die bevorzugten Ausführungsformen einer Haltegaszufuhr (50) und/oder einer Regelfluidzufuhr (60).

Ein weiterer Aspekt der Erfindung betrifft den Aufbau der Vorrichtung auf der Niederdruckseite. Der Niederdruck-Abscheider ist in einer bevorzugten Ausführungsform mit vier Verbindungsleitungen versehen, und zwar einer GasZuführungsleitung, einer Gas-Abführungsleitung, einer Ausgangsleitung für flüssige Komponenten und einer Verbindung zur Hochdruckseite. Die Ausgangsleitung für flüssige Komponenten ist bevorzugt an der Unterseite des Niederdruck-Abscheiders angebracht. Die Zuführungsleitung vom Hochdruckbereich zum Niederdruck-Abscheider weist vorzugsweise einen/eine Kanal/Kanüle auf, der/die in den unteren Teil des Innenraums vom Niederdruck-Abscheider hineinführt. Auch die Leitung zur Zuführung von gasförmigen Komponenten - die vorzugsweise mit Massenflussregler und Ventil versehen ist - weist einen/eine Kanal/Kanüle auf, der/die zum Unterraum des Niederdruck-Abscheiders führt.

Jeder einzelne Niederdruck-Abscheider ist vorzugsweise über eine Ausgangsleitung für gasförmige Komponenten (Gas-Ausführungsleitung) und zumindest ein Ventil mit zumindest einem Gas-Sammelbehälter (38) verbunden. An den Gas-Sammelbehälter beziehungsweise an den Bereich des Gas-Sammelbehälters sind vorzugsweise ein Drucksensor (36) und eine Vakuumpumpe (39) angeschlossen.

Die Auslegung der Vorrichtung zur Handhabung von Multikomponenten-Gemischen richtet sich nach der Dimensionierung der Apparatur zur Testung von Feststoff-Katalysatoren sowie den damit verbundenen Prozessparametem. Im allgemeinen weist die Apparatur zur Testung von Feststoff-Katalysatoren ein Katalysator-Fassungsvermögen (in den Reaktionsräumen) auf, das im Bereich von 0,5 bis 500 ml liegt.

Es ist auch möglich, dass die erfindungsgemäße Vorrichtung und das erfindungsgemäße Verfahren in Verbindung mit technischen Anlagen genutzt wird, deren Dimensionierung größer ist als die hier genannten.

Das Verhältnis vom Innenvolumen des Hochdruck-Abscheiders zum Volumen des eingesetzten Katalysators liegt bevorzugt in einem Bereich von 10 : 1 bis 100 : 1, wobei ein Verhältnis in einem Bereich von 20 : 1 bis 50 : 1 bevorzugt ist.

Das Innenvolumen des Niederdruck-Abscheiders entspricht in einer bevorzugten Ausführungsform zumindest dem Innenvolumen des Hochdruck-Abscheiders. In einer bevorzugten Ausführungsform liegt das Verhältnis von Innenvolumen des Niederdruck-Abscheiders zum Innenvolumen des Hochdruck-Abscheiders in einem Bereich von 1 : 1 bis 3 : 1, weiter bevorzugt in einem Bereich von 1 : 1 bis 5 : 1.

Bevorzugt weist ein Gas-Sammelbehälter bei Anwendungen zum Testen bzw. im Labormaßstab ein Innenvolumen im Bereich von 0,2 bis 10 l auf, wobei ein Innenvolumen im Bereich von 0,5 bis 7,5 l bevorzugt ist.

Die Hochdruckseite der Vorrichtung und die Niederdruckseite der Vorrichtung können getrennt voneinander wahlweise beheizt oder gekühlt werden. Darüber hinaus können auch auf der Niederdruckseite sowohl der Abscheider als auch der Gas-Sammelbehälter getrennt voneinander wahlweise beheizt oder gekühlt werden.

Bevorzugterweise reicht die Temperatur auf der Niederdruckseite der Anlage von 5 bis 150 °C, weiter bevorzugt von 40 bis 140 °C, insbesondere bevorzugt von 50 bis 100°C. Weiterhin ist es bevorzugt, dass Niederdruck-Abscheider und Hochdruck-Abscheider die gleiche oder eine ähnliche (± 10 %) Temperatur aufweisen.

Bei der Auslegung der Vorrichtung für ein Mehrfach-Reaktorsystem ist es unter anderem auch von Bedeutung, dass die Dimensionierung der einzelnen Baueinheiten der Vorrichtung genau bekannt sind. Der Begriff der *"Dimensionierung von Baueinheiten"* bezieht sich hierbei beispielsweise auf die Länge oder den Durchmesser von Leitungen, das Innenvolumen und die Form von Abscheidern, das Innenvolumen und die Form des Gas-Sammelbehälters. In einer bevorzugten Ausführungsform der vorliegenden Erfindung weisen die innerhalb der Vorrichtung verwendeten Baueinheiten gleiche oder ähnliche Dimension(en) auf. Insbesondere bei Vorrichtungen, bei denen nur geringe Mengen an Multikomponenten-Gemischen zu handhaben sind, ist unter anderem auch die Anpassung der einzelnen Systemkomponenten von entscheidender Bedeutung für die hohe Qualität der mittels der Vorrichtung erzielbaren Performance.

In einer bevorzugten Ausführungsform des Verfahrens erfolgt die Entleerung des Hochdruck-Abscheiders in den Niederdruck-Abscheider in Verbindung mit einer zeitkontrollierten **Steuerung eines Ventils** (83) in der Verbindung/ Leitung zwischen Hochdruck- und Niederdruck-Abscheider, wobei die zeitkontrollierte Steuerung bevorzugt automatisiert durch eine Prozesskontrolle erfolgt. Die (vollständige) Entleerung des hochdruckseitigen Abscheiders wird über eine Fluss- beziehungsweise eine Druckänderung innerhalb des Hochdruckbereichs von der Prozess-Steuerung registriert. Die **Prozess-Steuerung** nutzt das Signal, um das Ventil in der Verbindung zwischen Hoch- und Niederdruck-Abscheider automatisch zu schließen.

Die zeitlichen Abstände zwischen der Entleerung des Hochdruck-Abscheiders in den Niederdruck-Abscheider und/oder die zeitliche **Taktung** für das Strippen der Flüssigkeit auf der Niederdruckseite, sowie der Zeitpunkt der Analyse der Produkte, hängt im allgemeinen von der Auslegung und der Dimensionierung der Anlage und der genutzten Betriebsbedingungen bzw. Prozessparameter ab. Da von der Prozess-Steuerung bevorzugt auch die Menge an Eduktfluid registriert wird, das in den Reaktionsraum eingeführt wird, lässt sich der Füllstand des Hochdruck-Abscheiders bereits anhand der Bestimmung dieses Wertes zumindest näherungsweise abschätzen. Etwaige Ungenauigkeiten bei der Stoffabschätzung können auftreten, wenn sich beispielsweise Koks auf den Katalysatoren bildet.

In Abhängigkeit von den gewählten Reaktionsparametern wird der Hochdruck-Abscheider mehr oder weniger schnell mit Multikomponenten-Gemisch befüllt. In einer bevorzugten Ausführungsform wird bei einem bestimmten Befüllungsgrad des Hochdruck-Abscheiders das Verbindungsventil zum Niederdruck-Abscheider geöffnet und das Multikomponenten-Gemisch aus dem Hochdruck-Abscheider in den Niederdruck-Abscheider überführt. Darüber hinaus kann der Hochdruck-Abscheider in einer bevorzugten Ausführungsform auch mit einem Sensor ausgestattet sein, mit dessen Hilfe der Füllstand registriert wird. Bevorzugt wird die Überführung des Fluids vom Hochdruck-Abscheider in den Niederdruck-Abscheider automatisch durch die Prozess-Steuerung vorgenommen.

In Verbindung mit der **Überführung des Fluids** vom Hochdruck-Abscheider in den Niederdruck-Abscheider kommt es zu einer Entspannung des Fluids, bei welcher zumindest ein Teil der mittel flüchtigen Komponenten in die Gasphase übergehen können. Die bei der Entspannung des Fluids freigesetzten gasförmigen Komponenten werden in den Gas-Sammelbehälter eingeleitet. Das im Niederdruck-Abscheider aufgenommene Fluid enthält typischerweise weitere gasförmige Komponenten, die im Fluid gelöst sind und die nicht bei der Entspannung des Fluids in die Gasphase überführt werden.

Um die im Fluid gelösten gasförmigen Komponenten möglichst vollständig aus dem Fluid zu entfernen, wird deshalb bevorzugt **Inertgas/Stripgas** durch das Fluid im Niederdruck-Abscheider gespült. Hierdurch sollen die im Fluid gelösten (schwerer flüchtigen) gasförmigen Komponenten zum größten Teil aus dem Fluid ausgetrieben werden. Die gasförmigen Komponenten werden bevorzugt gemeinsam mit dem Inertgas/Stripgas in einem Gas-Sammelbehälter aufgenommen.

In einer bevorzugten Ausführungsform der erfindungsgemäßen Verfahrens wird der Stripvorgang so lange durchgeführt, bis der Druck im Niederdruckabscheider oberhalb Atmosphäredruck ist. Bevorzugterweise liegt der Enddruck, d.h. der Druck nach Beendigung des Stripvorgangs, im Niederdruckabscheiders im Bereich vom 1 bis 10 bar, wobei ein Bereich von 1 bis 5 bar weiter bevorzugt ist.

Weiter bevorzugt ist eine Verfahrensdurchführung, bei welcher der **Niederdruck-Abscheider** und der **Gas-Sammelbehälter** so temperiert werden, dass diese die gleiche oder eine ähnliche (im Bereich von 0 - 20 % Variation) **Temperatur** aufweisen.

Gemäß eines weiteren Aspektes der vorliegenden Erfindung kann der Niederdruckteil der Vorrichtung zur Aufarbeitung von Multikomponenten-Gemischen verwendet werden, die aus **Hochdruck-Flüssigphasen-Systemen** stammen. Als Beispiele sind Oligomerisations- beziehungsweise Polymerisationsreaktionen zu nennen, bei denen auch ein bestimmter Anteil an niedermolekularen Komponenten beziehungsweise Monomeren im Flüssigphasen-System auftreten kann.

In einer bevorzugten Ausführungsform wird das erfindungsgemäße Verfahren mittels einer **Prozess-Steuerung** zumindest teilweise automatisiert durchgeführt. In einer bevorzugten Ausführungsform können Sequenzen der einzelnen Prozess-Schritte auch **wiederholt** werden. Bei Versuchsapparaturen, die eine Vielzahl von Reaktionssystemen aufweisen, können die Reaktionssysteme sequentiell, teilweise parallel beziehungsweise parallel mittels der erfindungsgemäßen Vorrichtung angesteuert werden. Gemäß einer bevorzugten Ausführungsform werden Reinigungsschritte in den Programmablauf integriert. Reinigungsschritte bestehen vorzugsweise darin, dass beispielsweise Lösungsmittel oder Spülgas durch Teile der Vorrichtung gespült werden oder dass vorzugsweise Teile der Vorrichtung evakuiert werden, um mögliche Verunreinigungen zu entfernen.

Das erfindungsgemäße Verfahren ist flexibel und kann daher auch in Verbindung mit unterschiedlichen Reaktionsprozessen eingesetzt werden, die bevorzugt bei hohen Drücken ablaufen, und bei denen bevorzugt mehrkomponentenhaltige Produktfluide auftreten. Als Beispiele sind unter anderem folgende katalytischen Prozesse zu nennen: Fischer-Tropsch, Hydrotreating, Hydroentschwefelung und Crackung von Vakuum-Gasölen.

Durch die Vorgabe von **Prozessbedingungen** (wie beispielsweise Druck, Temperatur) und/oder durch Anpassen von apparativen Elementen (wie beispielsweise Widerstandswert von Restriktorelementen) lassen sich sowohl auf der Hochdruckseite als auch auf der Niederdruckseite die Schnittpunkte zwischen den gasförmigen Komponenten und den flüssigen Komponenten beeinflussen beziehungsweise steuern.

Bei der Durchführung des erfindungsgemäßen Verfahrens ist es bevorzugt, dass sich zwischen den im Hochdruck-Abscheider abgeschiedenen und in flüssige und gasförmige Komponenten aufgetrennten Phasen innerhalb kurzer Zeit ein **stationärer Betriebszustand** einstellt, insbesondere im Hinblick auf die Temperatur.

Das im Hochdruckbereich abgeschiedene gasförmige Fluid wird bevorzugt **kontinuierlich** über die Abgasleitung aus dem Hochdruckbereich entfernt und direkt einer separaten Analyseneinheit zugeführt beziehungsweise aus dem System abgeleitet, wobei bevorzugt der Volumenstrom des abgeleiteten Abgases - beispielsweise unter Verwendung eines Durchflussmessers - registriert wird. Die aus dem Hochdruck-Abscheider austretenden leicht flüchtigen Verbindungen werden typischerweise als Heißgas (HG) bzw. der aus dem Hochdruck-Abscheider austretende Volumenstrom wird als Heißgasfluss (HGF) bezeichnet. Aufgrund der stationären Betriebsbedingungen innerhalb des Hochdruck-Abscheiders weisen das gasförmige Fluid und das flüssige Fluid eine weitgehend konstante Zusammensetzung auf, die sich lediglich über lange Zeiträume auf Grund von Aktivitätsverlusten des Katalysators verschieben kann.

Die flüssigen und gasförmigen Produkte, die auf der Niederdruckseite anfallen, werden jeweils mittels integraler Analysen (beziehungsweise auch mittels stufenweiser integraler Analyse) qualitativ und quantitativ analysiert. Dabei ergeben sich für die kohlenwasserstoffhaltigen Fluide vorzugsweise die folgenden **Stoffbilanzen**:

$$\text{I)} \qquad M_{Gesamtprodukt} = M_{Hochdruck\text{-}Flüssigkeit} + HG_{Hochdruckseite}$$

$$\text{II)} \qquad M_{Hochdruck\text{-}Flüssigkeit} = M_{Niederdruck\text{-}Flüssigkeit} + M_{Niederdruck\text{-}Produktgas}$$

In einer bevorzugten Ausführungsform weist das erfindungsgemäße Verfahren eine hohe **Stoffwiederfindungsrate** auf, durch welche eine überdurchschnittlich genaue Massenbilanzierung möglich ist. Einen Beitrag zur hohen Stoffwiederfindungsrate liefert u.a. die bevorzugt mit Restriktor versehene Ausgangsleitung für gasförmige Komponenten (90), die an den reaktionsraumausgangsseitigen Hochdruckbereich der Vorrichung angeschlossen ist. Durch die Ausgangsleitung für gasförmige Verbindungen werden - wie bereits diskutiert - leicht flüchtige Komponenten bereits auf der Hochdruckseite abgetrennt und belasten nicht die Analyseeinheit auf der Niederdruckseite.

Weitere bevorzugte Ausführungsformen werden im Folgenden anhand der <u>**Figuren**</u> erläutert:

**Figur 1** zeigt eine parallele Anordnung von Reaktionsräumen (20') mit Hochdruck- und Niederdruck-Abscheidern (80) und (80') sowie Verbindungen zu einem Druckregelfluid (60) und einem Druckhaltegas (50), wie dies prinzipiell aus der WO 2005/063372 bekannt ist.

In den **Figuren 2 und 3** sind einzelne Teilbereiche der Vorrichtung dargestellt, wobei diese Teilbereiche einen einzelnen Reaktionsraum zeigen, der mit einer aus Hochdruck- und Niederdruck-Abscheider bestehenden Einheit verbunden ist. Die Hochdruckseite steht in diesen Ausführungsformen sowohl mit einem Druckregelfluid (62) als auch mit einem Druckhaltegas (52) in Verbindung. An die Einheiten mit dem Druckregelfluid (62) und Druckhaltegas (52) sind im allgemeinen Verbindungsleitungen zu weiteren Hochdruckbereichen von mehreren Reaktionsräumen angeschlossen, da es vorteilhaft ist, die stromabwärtsseitigen Hochdruckbereiche mittels der gleichen Einheiten für Druckregelfluid (62) und Druckhaltegas (52) anzusteuern. Die jeweiligen Verbindungsleitungen zu möglichen weiteren Hochdruckbereichen sind innerhalb der Baueinheiten (62) und (52) als kurze waagerechte Linien dargestellt. Weitere Details zu Druckregelfluid und Druckhaltegas sind der WO 2005/063372 zu entnehmen.

**Figur 4** ist dabei eine *erfindungsgemäße* Ausgestaltung des Hochdruck-Abscheiders (80), wobei dieser eine Verbindungsleitung (90) [hier mit Restriktor (25')] aufweist, welche zu einer Analyseneinheit (66) für leicht flüchtige gasförmige Komponenten führt (siehe Figur 6). Dies steht im Kontrast zur aus dem Stand der Technik bekannten Ausführungsform wie in **Figur 3** gezeigt, bei welcher alle gasförmigen Komponenten über eine Verbindungsleitung vom Hochdruck- in den Niederdruck-Abscheider geleitet werden.

Bevorzugt werden die leicht flüchtigen Komponenten, die bereits auf der Hochdruckseite aus der Ausgangsleitung als gasförmige Komponenten austreten, direkt mittels geeigneter Analysengeräte (66) analysiert, beziehungsweise treten durch der Ableitung für gasförmige Komponenten (67) aus dem System aus, wobei zumindest die Menge an austretendem gasförmigen Produkt mit einem Durchflussmesser bestimmt wird.

In **Figur 5** ist ein Teil des Niederdruckbereichs der erfindungsgemäßen Vorrichtung dargestellt, der in Verbindung mit einer Apparatur verwendet wird, bei der sechzehn Reaktoren parallel angeordnet sind. Die Darstellung zeigt einen einzelnen Niederdruck-Abscheider (80'), der über die Ventile (35, 75) und (035, 075) an zwei verschiedene Gas-Sammelbehälter (38, 038) angeschlossen ist. An das Leitungssystem zwischen den Ventilen (35) und (75) beziehungsweise (035) und (075) sind weitere Abscheider angeschlossen, wobei die zusätzlichen Verbindungsleitungen und die zusätzlichen Abscheider nicht in Figur 4 dargestellt sind. Es ist ganz allgemein vorteilhaft im Sinne der erfindungsgemäßen Vorrichtung, wie auch **Figur 5** zu entnehmen ist, dass die Anzahl der Gas-Sammelbehälter ungleich der Anzahl der Niederdruck-Abscheider beziehungsweise der Anzahl der Reaktoren ist. In einer bevorzugten Ausführungsform ist die Anzahl an Gas-Sammelbehältern niedriger als die Anzahl an Niederdruck-Abscheidern.

Die in **Figur 5** dargestellte Vorrichtung verfügt beispielsweise über sechzehn Niederdruck-Abscheider und zwei Gas-Sammelbehälter. Ganz allgemein (d.h. ohne Beschränkung auf Figur 5) ist es in einer bevorzugten Ausführungsform der Erfindung möglich, dass jeder einzelne Gas-Sammelbehälter (38, 038) über Verteilerleitungen und in Verbindung mit der geeigneten Ventilschaltung separat von jedem einzelnen Abscheider der Vielzahl (hier sechzehn) der Niederdruck-Abscheider aus angesteuert werden kann. In einer bevorzugten Ausgestaltung des erfindungsgemäßen Verfahrens wird das Gas zumindest eines Niederdruck-Abscheiders in einem Gas-Sammelbehälter aufgesammelt, während gleichzeitig das Gas zumindest eines anderen Niederdruck-Abscheiders nicht in diesen Sammelbehälter gelangt. Es ist weiter bevorzugt, dass anschließend, insbesondere nach Analyse des Inhaltes des Gas-Sammelbehälters, derselbe gespült und/oder ausgepumpt wird, und die vorstehend genannte Gasführung invertiert wird. Ebenso ist es denkbar, dass als Verbindungselemente innerhalb der Leitung zwischen den Niederdruck-Abscheidern und den Gas-Sammelbehältern auch - je nach der Anzahl an Abscheidereinheiten und Gas-Sammelbehältern, die in die Vorrichtung integriert sind - Multiportventile eingesetzt werden. Dabei ist es möglich, dass die Multiportventile in Verbindung mit beispielsweise Zwei- bzw. Drei-Wege-Ventilen angeordnet werden.

Bei der in **Figur 6** dargestellten Apparatur, die mit vier parallel angeordneten Reaktoren (20'01 - 20'04) ausgestattet ist, ist jeder einzelne Gas-Sammelbehälter (38) und (038) mit jeweils zwei Niederdruck-Abscheidern verbunden. Diese Darstellung ist nur beispielhaft, wobei in einer bevorzugten Ausführungsform jeder einzelne der zwei Gas-Sammelbehälter mit jedem der einzelnen der vier Niederdruck-Abscheider durch Schaltung in Wirkverbindung gestellt werden kann.

Beispielhaft ist in **Figur 7** die Ankopplung eines Teils der erfindungsgemäßen Vorrichtung zur Handhabung von Multikomponenten-Gemischen an einen kontinuierlich betriebenen Durchflussreaktor dargestellt. Die Verbindungsstelle zwischen dem Hochdruckreaktor und der erfindungsgemäßen Vorrichtung besteht in einer bevorzugten Ausführungsform aus einer Schleuse (87), wie in **Figur 7** gezeigt. In einer anderen Ausführungsform wird die erfindungsgemäße Vorrichtung an einen Loop-Reaktor (**Figur 8**) angekoppelt.

**Bezugszeichenliste:**

| | |
|---|---|
| 10 | - Versorgungseinheit für Edukt |
| 11 | - Druckregler für Edukt |
| 12 | - gemeinsame Eduktzufuhr |
| 15 | - reaktionsraumeingangsseitige Restriktoren |
| 20' | - Gas-Flüssig-Fest-Reaktor (Reaktionsraum) |
| 21 | - im Reaktionsraum befindliche Substanz (Katalysatorschüttung) |
| 25' | - reaktionsgasableitungsseitige Restriktoren |
| 27 | - Verbindung (Reaktionsraum - Restriktor - Multiportventil) |
| 30 | - Multiportventil |
| 31 | Gas-Verbindungsleitung (Hochdruckseite - Niederdruckseite) |
| 32 | - Ventil in Leitung (Stripgas bzw. Inertgas) zum Niederdruck-Abscheider |
| V32 | - Ventil in Leitung von Vakuumpumpe zum Niederdruck-Abscheider |
| 33 | - Massenflussregler |
| 34 | - Ausgangsleitung für gasförmige Verbindungen |
| 35 | - Ventil zwischen Niederdruck-Abscheider und Gas-Sammelbehälter |
| 36, 036 | - Drucksensoren |
| 37, 037 | - Ventile zwischen Gas-Sammelbehälter und Vakuumpumpe |
| 38, 038 | - Gas-Sammelbehälter |
| 39 | - Vakuumpumpe |
| 40 | - Ableitung zur Einheit zur Analyse |
| 41 | - Durchflussmesser |
| 45 | - Ableitung zur Abführeinrichtung |
| 50 | - Versorgungsleitung für Haltegas |
| 51 | - Druckregler für Haltegas |
| 52 | - gemeinsame Haltegaszufuhr |
| 53 | - Verbindung (Haltegas - Reaktionsräume) |
| 53' | - Verbindung (Haltegaszufuhr - Reaktionsgas-Ableitung) |
| 54 | - Knoten/Mischpunkt |

| 56 | - Flusssensor |
|---|---|
| 57 | - Drucksensor |
| 60 | - Versorgungseinheit für Regelfluid |
| 61 | - Massendurchfluss-Regler für Regelfluid |
| 62 | - gemeinsame Regelfluidzufuhr |
| 63 | - Verbindung (Regelfluidzufuhr- Reaktionsräume) |
| 65 | - Restriktoren für Regelfluidzufuhr |
| 66 | - Analyseneinheit für leicht flüchtige gasförmige Komponenten (Heißgas) |
| 67 | - Ableitung für gasförmige Komponenten |
| 70 | - Versorgungseinheit für Eduktflüssigkeit |
| 71 | - Massendurchfluss-Regler für Eduktflüssigkeit |
| 72 | - gemeinsame Eduktflüssigkeitszufuhr |
| 73 | - Restrikoren der Eduktflüssigkeitszufuhr |
| 74, 074 | - Ventile zwischen Gas-Sammelbehälter und Analyseneinheit |
| 76, 076 | - Ventile zwischen Gas-Sammelbehälter und Vakuumpumpe |
| 80 | - Einheit zur Gas-Flüssig-Trennung (hochdruckseitig) |
| 80' | - Einheit zur Gas-Flüssig-Trennung (niederdruckseitig) |
| 81 | - Verbindung (Gas-Flüssig-Trennung) |
| 82 | - Reaktionsgas-Ableitung |
| 83 | - Mittel zur Flüssigkeitsableitung (hochdruckseitig) |
| 83' | - Mittel zur Flüssigkeitsableitung (niederdruckseitig) |
| 84 | - Flüssigkeitsableitung (niederdruckseitig) |
| 90 | - Ausgangsverbindung von Hochdruck-Abscheider zur Analyseneinheit für Heißgas/leicht flüchtige Komponenten |
| 90', 090' - | Zuleitung zur Analyseneinheit für förmige Komponenten aus Niederdruck-Abscheider |
| 92 | - Analyseneinheit für flüssige Komponenten bzw. Probensammler |
| 94 | - Gaszufuhr (Inertgas bzw. Stripgas) |
| 96 | - Verbindungsleitung zur Vakuumpumpe |
| 100 - 110 | - Zonen separat geregelter Temperatur |

In Verbindung mit den in Fig. 6 dargestellten Baueinheiten einer Mehrfach-Apparatur gelten zusätzlich die folgenden Bezugszeichen:

| 20'01, 20'02, 20'03 ...- | Reaktionsraum Nummer 1, 2, 3... |
|---|---|
| 25'01, 25'02, 25'03...- | reaktionsgasableitungsseitiger Restriktor Nummer 1, 2, 3... |
| 8001,8002,8003... - | Hochdruck-Abscheider Nummer 1, 2, 3... |
| 8301, 8302, 8303... - | Mittel zur Flüssigkeitsableitung Nummer 1, 2, 3... |
| 8401, 8402, 8403... - | Flüssigkeitsableitung Nummer 1, 2, 3... |
| 9201, 9202, 9203... - | Zuleitung Nummer 1, 2, 3... zur Analyseneinheit für flüssige Komponenten bzw. Probensammler |

**Patentansprüche**

1. Vorrichtung zur Handhabung und Analyse von Multikomponenten-Gemischen, umfassend zumindest die folgenden Komponenten:

(a) zumindest zwei parallele Reaktionsräume (20, 20'01, 20'02, ...);
(b) pro Reaktionsraum zumindest eine reaktionsraumausgangsseitige Verbindung zu zumindest einem Hochdruck-Abscheider (80);
(c) pro Reaktionsraum zumindest einen Hochdruck-Abscheider (80);
(d) pro Hochdruck-Abscheider (80) zumindest einen mit diesem über eine Verbindung verbundenen Niederdruck-Abscheider (80'),

wobei jeder Hochdruck-Abscheider (80) zumindest eine Ausgangsverbindung (90) für gasförmige Komponenten aufweist, die mit einer Einheit zur Analyse verbunden ist, und

jeder Niederdruck-Abscheider (80') eine Ausgangsleitung (83') für flüssige Komponenten und eine Ausgangsleitung (34) für gasförmige Komponenten aufweist,

sowie jeder Niederdruck-Abscheider (80') mit einer Einheit zur Analyse verbunden ist.

2. Vorrichtung nach Anspruch 1, **dadurch gekennzeichnet, dass** im reaktionsraumausgangsseitigen Hochdruckbereich, d.h. zwischen Ausgang des Reaktionsraumes (20, ...) und Hochdruck-Abscheider (80), und/oder in einer im Hochdruckbereich zum Hochdruck-Abscheider führenden Verbindung, jeweils pro Einheit "Reaktionsraum-Hochdruck-Abscheider" eine Verbindung zu einem (Druck-)Haltegas (52) und/oder eine Verbindung zu einem (Druck-)Regelfluid (60) vorliegt.

3. Vorrichtung nach Anspruch 1 oder 2, **dadurch gekennzeichnet, dass** jeder Niederdruck-Abscheider (80') eine Zuleitung für Inert- bzw. Stripgas (94) aufweist.

4. Vorrichtung nach einem der vorstehenden Ansprüche, **dadurch gekennzeichnet, dass** die Ausgangsleitung (34) des Niederdruck-Abscheiders für gasförmige Komponenten mit zumindest einem Gas-Sammelbehälter (38) verbunden ist.

5. Vorrichtung nach Anspruch 4, **dadurch gekennzeichnet, dass** in einer parallelen Anordnung von zumindest zwei Niederdruck-Abscheidern (80') pro zumindest zwei Niederdruck-Abscheidern jeweils zumindest zwei Verbindungen zu einem den zumindest zwei Niederdruck-Abscheidern gemeinsamem Gas-Sammelbehälter (38) vorliegt.

6. Vorrichtung nach einem der vorstehenden Ansprüche, **dadurch gekennzeichnet, dass** jede Ausgangsverbindung (90) zumindest einen Restriktor umfasst.

7. Vorrichtung nach einem der vorstehenden Ansprüche, **dadurch gekennzeichnet dass** das Verhältnis von Innenvolumen des Hochdruck-Abscheiders zu Volumen des eingesetzten Katalysators in einem Bereich von 10 : 1 bis 100 : 1 liegt, bevorzugt in einem Bereich von 20 : 1 bis 50 : 1.

8. Verfahren zur Handhabung von Multikomponenten-Gemischen unter Verwendung einer Vorrichtung nach einem der Ansprüche 1-7, welches zumindest die folgenden Schritte umfasst:

   (iii) Abscheiden von zumindest einer Multikomponenten-Mischungen, die aus zumindest zwei parallelen Reaktionsräumen (20) austritt, in jeweils einen diesen zugeordneten Hochdruck-Abscheider (80), welcher in Wirkverbindung mit einem Niederdruck-Abscheider (80') steht;
   (iv) Ausschleusen von leicht flüchtigen gasförmigen Komponenten aus zumindest einem Hochdruckbereich eines Hochdruck-Abscheiders (80) über eine Ausgangsverbindung (90) für gasförmige Komponenten, die direkt zu einem Analysesystem führt.

9. Verfahren nach Anspruch 8, **dadurch gekennzeichnet, dass** jede Ausgangsverbindung (90) zumindest einen Restriktor umfasst.

10. Verfahren nach Anspruch 8 oder 9, **dadurch gekennzeichnet, dass** zumindest ein weiterer der folgenden Schritte durchgeführt wird:

   (i) Öffnen eines Ventils zwischen zumindest einem Gas-Sammelbehälter, der mit einem Niederdruck-Abscheider verbunden ist, und einer Vakuumpumpe und Abpumpen von zumindest Teilen der im Gas-Sammelbehälter befindliche Gasphase;
   (ii) Schließen des Ventils zwischen Gas-Sammelbehälter und Vakuumpumpe bei Erreichen eines vorgegebenen Druckes;
   (v) Öffnen der Verbindung von Hochdruck-Abscheider zu Niederdruck-Abscheider bei Erreichen eines vorbestimmten Befüllungsgrades eines Hochdruck-Abscheiders und Befördern des im Hochdruck-Abscheider befindlichen Fluides in den Niederdruck-Abscheider;
   (vi) Einleiten von Inertgas/Stripgas in das im Niederdruck-Abscheider befindliche Fluid;
   (vii) Weiterleiten des in den Niederdruck-Abscheider eingeleiteten Inertgases/Stripgases und/oder der gasförmigen Komponenten aus dem Niederdruck-Abscheider in einen Gas-Sammelbehälter;
   (viii) Entleeren des im Niederdruck-Abscheider gesammelten flüssigen Fluids über eine Ausgangsleitung;

(ix) Durchführen des Verfahrens mittels einer automatischen Prozess-Steuerung;

(x) Online-Analyse von gasförmigen Verbindungen, die aus dem Hochdruckbereich über die Ausgangsverbindung (90) ausgeschleust werden;

(xi) Durchführen des Verfahrens mittels einer automatischen Prozess-Steuerung;

(xii) Aufnahme des aus dem Niederdruck-Abscheider ausgeschleusten flüssigen Fluids mittels eines automatischen Proben-Sammelsystems und/oder Analyse des Produktgemisches.

11. Verfahren nach einem der vorstehenden Verfahrensansprüche, **dadurch gekennzeichnet, dass** es sich bei den leicht flüchtigen gasförmigen Verbindungen, welche am Hochdruck-Abscheider abgezogen und über die Ausgangsverbindung (90) der Einheit zur Analyse (66) zugeführt werden, um Heißgas, bevorzugt um Wasserstoff, Methan, Kohlenmonoxid; $C_2$-Komponenten Ethan, Ethen, Ethin; Trägergase; $SO_x$ oder $NO_x$, oder um eine Mischung hiervon, handelt.

12. Verfahren nach einem der vorstehenden Verfahrensansprüche, **dadurch gekennzeichnet, dass** durch Restriktorelemente in der Ausgangsverbindung (90) der Austritt von gasförmigen Komponenten, die eine geringere Flüchtigkeit aufweisen, an dieser Stelle, d.h. aus dem Hochdruck-Abscheider (80) in die Ausgangsverbindung (90), bis auf einen vorgegebenen Restwert unterbunden wird.

13. Verfahren nach einem der vorstehenden Verfahrensansprüche, **dadurch gekennzeichnet, dass** gasförmige Komponenten kontinuierlich über die Ausgangsverbindung(en) (90) für gasförmige Komponenten abgeleitet werden.

14. Verwendung einer Vorrichtung nach einem der Ansprüche 1-7 auf dem Gebiet der Hochdurchsatz-Forschung oder der kombinatorischen Chemie, bevorzugt zur Untersuchung von Multikomponenten-Gemischen, die bei Experimenten mit Katalysatoren entstehen.

15. Verwendung einer Vorrichtung nach einem der Ansprüche 1-7 in Verbindung mit Hochdruck-Prozessen.

**Claims**

1. Device for handling and analyzing multi-component mixtures, comprising at least the following components:

(a) at least two parallel reaction spaces (20, 20'01, 20'02, ...);
(b) per reaction space at least one connection from the outlet side of the reaction space to at least one high-pressure separator (80);
(c) per reaction space at least one high-pressure separator (80);
(d) per high-pressure separator (80) at least one low-pressure separator (80'), which is connected to said high-pressure separator via a connection.

Wherein each high-pressure separator (80) comprises at least one discharge connection (90) for gaseous components, which are connected to a unit for analysis, and
each low-pressure separator (80') has a discharge pipe (83') for liquid components and a discharge pipe (34) for gaseous components,
and each low-pressure separator (80') is connected to a unit for analysis.

2. Device according to claim 1, **characterized in that** in the high-pressure region of the outlet side of the reaction space, that is between the outlet of the reaction space (20, ...) and high-pressure separator (80), and/or in a connection, which leads in the high-pressure region to the high-pressure separator, per unit "reaction space - high-pressure separator" a connection to a (pressure) holding gas (52) and/or a connection to a (pressure) control fluid (60) is provided, respectively.

3. Device according to claim 1 or 2, **characterized in that** each low-pressure separator (80') comprises a feed line for inert gas, respectively strip gas (94).

4. Device according to any one of the preceding claims, **characterized in that** the discharge pipe (34) of the low-pressure separator for gaseous components is connected to at least one gas-collecting container (38).

5. Device according to claim 4, **characterized in that** in a parallel arrangement of at least two low-pressure separators (80') per at least two low-pressure separators at least two connections to a gas-collecting container (38) are provided, which is shared by the at least two low-pressure separators, respectively.

6. Device according to any one of the preceding claims, **characterized in that** each discharge connection (90) comprises at least one restrictor.

7. Device according to any one of the preceding claims, **characterized in that** the ratio of the internal volume of the high-pressure separator to the volume of the used catalyst is in the range of from 10:1 to 100:1, preferably in a range of from 20:1 to 50:1.

8. Method for handling multi-component mixtures using a device according to any one of claims 1 to 7, which comprises at least the following steps:

(iii) separating a least one multi-component mixture, which emanates from at least two parallel reaction spaces (20), into a high-pressure separator (80), which corresponds to these at least two parallel reaction spaces, respectively, which is in operative connection with a low-pressure separator (80');
(iv) discharging highly volatile gaseous components from at least one high-pressure region of a high-pressure separator (80) via a discharge connection (90) for gaseous components, which directly leads to a system for analysis.

9. Method according to claim 8, **characterized in that** each discharge connection (90) comprises at least one restrictor.

10. Method according to claim 8 or 9, **characterized in that** at least one of the following steps is performed:

(i) opening a valve between at least one gas-collecting container, which is connected to a low-pressure separator, and a vacuum pump, and pumping down at least portions of the gas phase being present in the gas-collecting container;
(ii) closing the valve between the gas-collecting container and the vacuum pump as soon as a predetermined pressure is reached;
(v) opening the connection from high-pressure separator to low-pressure separator as soon as a predetermined filling level of a high-pressure separator is reached, and feeding the fluid being present in the high-pressure separator into the low-pressure separator;
(vi) feeding inert gas / strip gas into the fluid being present in the low-pressure separator;
(vii) transferring the inert gas / strip gas, which has been fed into the low-pressure separator and/or the gaseous components from the low-pressure separator into a gas-collecting container;
(viii) discharging the liquid fluid, which has been collected in the low-pressure separator via a discharge pipe;
(ix) performing the method by means of an automatic process control;
(x) online-analysis of gaseous compounds, which are discharged from the high-pressure region via discharge connection (90);
(xi) performing the method by means of an automatic process control;
(xii) taking-up the liquid fluid, which has been discharged from the low-pressure separator by means of an automatic sample-collecting system and/or analysis of the product mixture.

11. Method according to any one of the preceding method claims, **characterized in that** the highly volatile gaseous compounds, which are discharged at the high-pressure separator and are fed via the discharge connection (90) to the unit for analysis (66), is hot gas, preferably hydrogen, methane, carbon monoxide; $C_2$-components ethane, ethene, ethine; carrier gases, $SO_x$ or $NO_x$, or a mixture thereof.

12. Method according to any one of the preceding method claims, **characterized in that** by means of restrictor elements in the discharge connection (90), the discharge of gaseous components, which have a lower volatility, at this point, that is from the high-pressure separator (80) into the discharge connection (90), is prevented except for a predetermined residual value.

13. Method according to any one of the preceding method claims, **characterized in that** gaseous components are continuously discharged via the discharge connection(s) (90) for gaseous components.

14. Use of a device according to any one of claims 1 to 7 in the field of the high-throughput research or the combinatorial chemistry, preferably for the analysis of multi-component mixtures, which are generated in experiments with catalysts.

**15.** Use of a device according to any one of claims 1 to 7 in connection with high-pressure processes.

**Revendications**

**1.** Dispositif de manipulation et d'analyse de mélanges multi-composants, comprenant au moins les composants suivants :

(a) au moins deux espaces de réaction parallèles (20, 20'01, 20'02, ...) ;
(b) par espace de réaction au moins un raccordement allant du côté refoulement de l'espace de réaction à au moins un séparateur haute pression (80) ;
(c) par espace de réaction au moins un séparateur haute pression (80) ;
(d) par séparateur haute pression (80) au moins un séparateur basse pression (80'), lequel est raccordé audit séparateur haute pression via un raccordement,

dans lequel chaque séparateur haute pression (80) comprend au moins un raccordement d'évacuation (90) pour les composants gazeux, qui est raccordé à une unité pour analyse, et
chaque séparateur basse pression (80') comporte un tuyau d'évacuation (83') pour les composants liquides et un tuyau d'évacuation (34) pour les composants gazeux,
et chaque séparateur basse pression (80') est raccordé à une unité pour analyse.

**2.** Dispositif selon la revendication 1, **caractérisé en ce que** dans la région haute pression du côté refoulement de l'espace de réaction, c'est-à-dire entre le refoulement de l'espace de réaction (20, ...) et le séparateur haute pression (80), et/ou dans un raccordement qui amène dans la région de haute pression vers le séparateur haute pression, par unité « espace de réaction - séparateur haute pression », un raccordement à un gaz de maintien (de pression) (52) et/ou un raccordement à un fluide de commande (de pression) (60) est prévu, respectivement.

**3.** Dispositif selon la revendication 1 ou 2, **caractérisé en ce que** chaque séparateur basse pression (80') comprend une ligne d'alimentation pour gaz inerte, respectivement pour gaz d'épuration (94).

**4.** Dispositif selon l'une quelconque des revendications précédentes, **caractérisé en ce que** le tuyau d'évacuation (34) du séparateur basse pression pour les composants gazeux est raccordé à au moins un contenant collecteur de gaz (38).

**5.** Dispositif selon la revendication 4, **caractérisé en ce que** dans un agencement parallèle d'au moins deux séparateurs basse pression (80') par au moins deux séparateurs basse pression, au moins deux raccordements à un contenant collecteur de gaz (38) sont prévus, lequel est partagé par les au moins deux séparateurs basse pression, respectivement.

**6.** Dispositif selon l'une quelconque des revendications précédentes, **caractérisé en ce que** chaque raccordement d'évacuation (90) comprend au moins un restricteur.

**7.** Dispositif selon l'une quelconque des revendications précédentes, **caractérisé en ce que** le rapport du volume interne du séparateur haute pression au volume du catalyseur utilisé est dans la plage de 10 : 1 à 100 : 1, de préférence dans une plage de 20 : 1 à 50 : 1.

**8.** Procédé de manipulation de mélanges multi-composants utilisant un dispositif selon l'une quelconque des revendications 1 à 7, comprenant au moins les étapes suivantes :

(iii) séparation d'au moins un mélange multi-composant, qui émane d'au moins deux espaces de réaction parallèles (20), en un séparateur haute pression (80), qui correspond à ces au moins deux espaces de réaction parallèles, respectivement, qui est raccordé de façon opérationnelle à un séparateur basse pression (80') ;
(iv) évacuation de composants gazeux très volatils d'au moins une région haute pression d'un séparateur haute pression (80) via un raccordement d'évacuation (90) pour les composants gazeux, qui mène directement à un système pour analyse.

**9.** Procédé selon la revendication 8, **caractérisé en ce que** chaque raccordement d'évacuation (90) comprend au moins un restricteur.

**10.** Procédé selon la revendication 8 ou 9, **caractérisé en ce qu'**au moins l'une des étapes suivantes est réalisée :

(i) ouverture d'une vanne entre au moins un contenant collecteur de gaz, qui est raccordé à un séparateur basse pression, et une pompe à vide, et pompage d'au moins des portions de la phase gazeuse présente dans le contenant collecteur de gaz ;

(ii) fermeture de la vanne entre le contenant collecteur de gaz et la pompe à vide dès qu'une pression prédéterminée est atteinte ;

(v) ouverture du raccordement du séparateur haute pression au séparateur basse pression dès qu'un niveau de remplissage prédéterminé d'un séparateur haute pression est atteint, et distribution dans le séparateur basse pression du fluide présent dans le séparateur haute pression ;

(vi) distribution de gaz inerte / gaz d'épuration dans le fluide présent dans le séparateur basse pression ;

(vii) transfert du gaz inerte / gaz d'épuration, qui a été distribué dans le séparateur basse pression et/ou des composants gazeux du séparateur basse pression, dans le contenant collecteur de gaz ;

(viii) évacuation du fluide liquide, qui a été collecté dans le séparateur basse pression via un tuyau d'évacuation ;

(ix) réalisation du procédé au moyen d'une commande de traitement automatique ;

(x) analyse en ligne de composés gazeux, qui sont évacués de la région de haute pression via un raccordement d'évacuation (90) ;

(xi) réalisation du procédé au moyen d'une commande de traitement automatique ;

(xii) reprise du- fluide liquide qui a été évacué du séparateur basse pression au moyen d'un système de collecte d'échantillon automatique et/ou d'une analyse du mélange de produit.

**11.** Procédé selon l'une quelconque des revendications précédentes, **caractérisé en ce que** les composés gazeux très volatils qui sont évacués au niveau du séparateur haute pression et sont distribués via le raccordement d'évacuation (90) vers l'unité pour analyse (66), sont du gaz chaud, de préférence de l'hydrogène, du méthane, du monoxyde de carbone ; des composants en $C_2$ éthane, éthène, éthine ; des gaz vecteurs, SOx ou Nox ou un de leurs mélanges.

**12.** Procédé selon l'une quelconque des revendications précédentes, **caractérisé en ce qu'**au moyen d'éléments de restricteur dans le raccordement d'évacuation (90), l'évacuation de composants gazeux, qui ont une volatilité inférieure, à ce point, c'est-à-dire allant du séparateur haute pression (80) dans le raccordement d'évacuation (90), est évitée sauf pour une valeur résiduelle prédéterminée.

**13.** Procédé selon l'une quelconque des revendications précédentes , **caractérisé en ce que** les composants gazeux sont évacués de façon continue via les raccordement(s) d'évacuation (90) pour composants gazeux.

**14.** Utilisation d'un dispositif selon l'une quelconque des revendications 1 à 7, dans le domaine de la recherche de grande capacité ou la chimie combinatoire, de préférence pour l'analyse de mélanges multi-composants, qui sont générés dans des expériences avec des catalyseurs.

**15.** Utilisation d'un dispositif selon l'une quelconque des revendications 1 à 7, en lien avec des processus à haute pression.

**Fig. 1**

Fig. 2

**Fig. 3**

Fig. 4

Fig.5

Fig. 6

Fig.7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005063372 A
- DE 10361003 B3
- WO 200209220 A
- US 2005169815 A

**In der Beschreibung aufgeführte Nicht-Patentliteratur**

- **D. WALLENSTEIN et al.** *Applied Catalysis A: General,* 1998, vol. 167, 141-155
- **D. WALLENSTEIN et al.** *Applied Catalysis A: General,* 2002, vol. 231, 227-242